(19) Europäisches Patentamt
European Patent Office
Office européen des brevets

(11) EP 1 516 892 B1

(12) **EUROPEAN PATENT SPECIFICATION**

(45) Date of publication and mention of the grant of the patent:
**10.09.2008 Bulletin 2008/37**

(21) Application number: **03733243.4**

(22) Date of filing: **02.06.2003**

(51) Int Cl.:
***C08L 67/02*** *(2006.01)*

(86) International application number:
**PCT/JP2003/006963**

(87) International publication number:
**WO 2003/102079 (11.12.2003 Gazette 2003/50)**

# (54) POLYESTER COMPOSITION AND PACKAGING MATERIAL COMPRISING THE SAME

POLYESTERZUSAMMENSETZUNG UND DIESE ENTHALTENDES VERPACKUNGSMATERIAL

COMPOSITION POLYESTER ET MATIERE D'EMBALLAGE LA CONTENANT

(84) Designated Contracting States:
**AT BE BG CH CY CZ DE DK EE ES FI FR GB GR HU IE IT LI LU MC NL PT RO SE SI SK TR**

(30) Priority: **03.06.2002 JP 2002161788**
**02.08.2002 JP 2002226314**
**08.11.2002 JP 2002325302**

(43) Date of publication of application:
**23.03.2005 Bulletin 2005/12**

(73) Proprietor: **Toyo Boseki Kabushiki Kaisha**
**Osaka 530-0004 (JP)**

(72) Inventors:
- **NAKAYAMA, Seiji,**
**c/o Toyo Boseki Kabushiki Kaisha**
**Ohtsu-shi,**
**Shiga 520-0292 (JP)**
- **HARA, Atsushi,**
**c/o Toyo Boseki Kabushiki Kaisha**
**Ohtsu-shi,**
**Shiga 520-0292 (JP)**
- **NAKAI, Yasuki,**
**c/o Toyo Boseki Kabushiki Kaisha**
**Ohtsu-shi,**
**Shiga 520-0292 (JP)**
- **MARUYAMA, Gaku,**
**c/o Toyo Boseki Kabushiki Kaisha**
**Tsuruga-shi,**
**Fukui 914-8550 (JP)**
- **ETO, Yoshitaka**
**Shiga-cho,**
**Shiga-gun,**
**Shiga 520-0528 (JP)**

(74) Representative: **Weber, Thomas et al**
**Deichmannhaus am Dom**
**Postfach 10 22 41**
**50462 Köln (DE)**

(56) References cited:
**EP-A- 0 351 118**
**EP-A- 0 522 174**
**WO-A1-97/15629**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 516 892 B1

## Description

Technical Field

The present invention relates to a polyester composition suitably used as a material for molded articles such as blow molded containers including drink bottles, films, and sheets and relates to a polyester packaging material comprising the same, which is excellent in transparency, thermal stability, and flavor retention and also excellent in gas barrier properties.

Background Art

Thermoplastic polyesters such as polyethylene terephthalate (hereinafter, sometimes abbreviated as PET) are industrially highly valuable owing to excellence in both of mechanical properties and chemical properties and hence are widely used as fibers, films, sheets, bottles, and the like. Furthermore, since the thermoplastic polyesters are excellent in thermal resistance, transparency, and gas barrier properties, they are particularly most suitable as materials for packaging materials such as drink-charging containers for juices, soft drinks, carbonated drinks, and the like.

However, PET contains acetaldehyde (hereinafter, sometimes abbreviated as AA) as a by-product at melt polycondensation. Further, PET forms acetaldehyde through thermal decomposition at thermal molding into molded articles such as blow-molded articles to increase an acetaldehyde content in the material of the resulting molded articles, so that taste and smell of drinks charged in the blow-molded articles and the like are affected.

In order to solve such problems, various measures have been hitherto adopted for reducing the acetaldehyde content in the thermoplastic polyester molded articles. In general, there are known a method of using a thermoplastic polyester having a reduced AA content by solid-phase polymerization of a prepolymer obtained by melt polymerization, a method of reducing AA formation at molding using a copolymerized thermoplastic polyester having a lower melting point, a method of lowering a molding temperature at thermal molding as far as possible, a method of decreasing shear stress at thermal molding as far as possible, and the like.

Recently, containers made of thermoplastic polyesters including polyethylene terephthalate as a representative have became used as containers for low flavor drinks such as mineral water and oolong tea. In the case of such drinks, these drinks are sterilized by filling while hot or by heating after filling but it is revealed that taste and smell of the contents in these containers are not improved only by reduction of the AA content in the materials of the thermoplastic polyester molded articles according to the above-mentioned methods. Accordingly, improvement thereof has been desired.

As technologies for solving such problems, there have been proposed a method of using a polyester composition obtained by adding an m-xylylene group-containing polyamide resin in an amount of 0.05 part by weight or more but 1 part by weight or less per 100 parts by weight of a thermoplastic polyester resin (JP 6-6662 B) and a container made of a polyester comprising a polyester composition obtained by incorporating a specific polyamide in which the content of a terminal amino group is regulated within a certain range (JP 4-71425 B), but it becomes revealed that the containers are sometimes still insufficient as low flavor drinks such as mineral water in view of taste and smell of the drinks.

On the other hand, it has been revealed that the thermoplastic polyester packaging materials mainly comprising PET are excellent in gas barrier properties as mentioned above but it is unsatisfactory as blow-molded articles for contents containing compounds extremely sensitive to oxygen such as vitamin C, so that improvement thereof has been desired.

As technologies for dissolving such problems, we have proposed a thermoplastic polyester blow-molded article obtained by incorporating 1 to 100 parts by weight of an m-xylylene group-containing polyamide resin per 100 parts by weight of a thermoplastic polyester resin (JP 4-54702 B). However, it has been revealed that taste and smell of drinks, particularly low flavor drinks contained in blow-molded articles comprising such polyester composition are problematic.

Further, it has been examined that a thermoplastic polyester film having good thermal resistance is laminated to a metal plate and the above laminated metal plate is utilized as metal cans mainly for food containers of foods such as beverages, beer, and canned goods. In such applications, in order to improve flavor retention, a thermoplastic polyester film for laminating metal plates having an acetaldehyde content of 20 ppm or less is proposed but it is revealed that the problems are not completely solved even when such a means is employed, so that improvement thereof has been desired.

The invention solves the above problems in conventional arts and an object thereof is to provide a polyester composition excellent in transparency, thermal stability, and flavor retention or transparency, thermal stability, flavor retention, and gas barrier properties and also a polyester packaging material comprising the same.

EP-A-0522174 discloses a process for producing a structure of a composition in which a polyolefin resin A and a thermoplastic polyester resin B interpenetrate into each other to form a dispersion having a network structure, characterized in that in the melt-kneading of the polyolefin resin A as the matrix with the thermoplastic polyester resin B, a filler C having a surface tension which is higher than that of the component B at the melt-kneading temperature and an average particle diameter of 0.05 to 50 μm is melt-kneaded in amounts satisfying the following formulae (1) and (2):

$$B/(A + B) = 0.05 \text{ to } 0.5 \text{ (weight ratio)} \quad (1)$$

$$C/(B + C) = 0.1 \text{ to } 0.7 \text{ (weight ratio)} \quad (2).$$

WO-A-97/15629 discloses polyester blend compositions having improved flavor retaining properties and color, comprising:

(A) 98.0 to 99.95 weight percent of a polyester which comprises

(1) a dicarboxylic acid component comprising repeat units from at least 85 mole percent terephthalic acid or naphthalenedicarboxylic acid derived from terephthalic acid or naphthalenedicarboxylic acid respectively; and
(2) a diol component comprising repeat units from at least 85 mole percent ethylene glycol, based on 100 mole percent dicarboxylic acid and 100 mole percent diol; and

(B) 2.0 to 0.05 weight percent of a polyamide; wherein the combined weights of (A) and (B) total 100 percent.

Brief Description of the Drawings

Fig. 1 is a top view of the molded plate with steps used for evaluation.
Fig. 2 is a side view of the molded plate with steps used for evaluation.

Disclosure of the Invention

As a result of an examination on a polyester packaging material excellent in transparency and flavor retention or transparency, flavor retention, and gas barrier properties using a polyester composition comprising 100 parts by weight of a thermoplastic polyester and 0.1 to 50 parts by weight of a partially aromatic polyamide, the present inventors have found that the content of an alkali metal atom in the polyester composition or the content of an alkali metal atom in the polyester packaging material is connected with transparency and flavor retention, and thus they have accomplished the invention.
Namely, the polyester composition of the invention is a polyester composition comprising 100 parts by weight of a thermoplastic polyester and 0.1 to 50 parts by weight of a partially aromatic polyamide, wherein the content of an alkali metal atom in the polyester composition is within the range of 0.1 to 300 ppm.
In a preferred embodiment the polyester composition has a content of phosphorus atom in the polyester composition from 5 to 200 ppm.
The partially aromatic polyamide is preferably an m-xylylene group-containing polyamide.
In this case, the thermoplastic polyester is preferably a polyester comprising ethylene terephthalate as a main repeating unit.
In this case, the difference ($A_t$ - $A_0$) between the acetaldehyde content ($A_t$) (ppm) in an molded article obtained by injection molding of the above polyester composition and the acetaldehyde content (Ao) (ppm) of the polyester composition before injection molding is preferably 20 ppm or less.
Herein, the acetaldehyde content ($A_t$) (ppm) in a molded article obtained by injection molding of the polyester composition is a value measured in accordance with the measuring method (7) of Example to be mentioned below.
In this case, the content of a cyclic trimer derived from the thermoplastic polyester may be 0.7% by weight or less.
In this case, the increase of a cyclic trimer derived from the thermoplastic polyester during melting treatment at 290°C for 30 minutes may be 0.4% by weight or less.
Furthermore, the polyester packaging material of the invention is a polyester packaging material, which is obtained by molding the polyester composition mentioned above.
The packaging material may be at least any one of blow-molded articles, sheet articles, and films.
The following will specifically describe embodiments of the polyester composition of the invention and polyester packaging material comprising the same.

<Polyester>

The thermoplastic polyester for use in the invention is a crystalline thermoplastic polyester obtained mainly from an aromatic dicarboxylic acid component and a glycol component, more preferably a thermoplastic polyester whose acid component comprises the aromatic dicarboxylic acid unit in a ratio of 85 mol% or more, particularly preferably 90 mol% or more, most preferably a thermoplastic polyester whose acid component comprises the aromatic dicarboxylic acid unit in a ratio of 95 mol% or more.

The aromatic dicarboxylic acid component constituting the thermoplastic polyester for use in the invention includes aromatic dicarboxylic acids such as terephthalic acid, 2,6-naphthalenedicarboxylic acid, diphenyl-4,4'-dicarboxylic acid, and diphenoxyethanedicarboxylic acid; functional derivatives thereof; and the like.

Further, the glycol component constituting the thermoplastic polyester for use in the invention includes ethylene glycol, trimethylene glycol, tetramethylene glycol, alicyclic glycols such as cyclohexanedimethanol, and the like.

The acid component to be used as a copolymerization component in the above thermoplastic polyester includes aromatic dicarboxylic acids such as terephthalic acid, 2,6-naphthalenedicarboxylic acid, isophthalic acid, diphenyl-4,4'-dicarboxylic acid, and diphenoxyethanedicarboxylic acid; oxy acids such as p-oxybenzoic acid and oxycaproic acid and functional derivatives thereof; aliphatic dicarboxylic acids such as adipic acid, sebacic acid, succinic acid, glutaric acid, and dimer acid and functional derivatives thereof; alicyclic dicarboxylic acids such as hexahydroterephthalic acid, hexahydroisophthalic acid, and cyclohexanedicarboxylic acid and functional derivatives thereof; and the like.

The glycol component to be used as a copolymerization component in the above thermoplastic polyester includes aliphatic glycols such as ethylene glycol, trimethylene glycol, tetramethylene glycol, diethylene glycol, and neopentyl glycol; alicyclic glycols such as cyclohexanedimethanol; aromatic glycols such as 1,3-bis(2-hydroxyethoxy) benzene, bisphenol A, and alkylene oxide adducts of bisphenol A; polyalkylene glycols such as polyethylene glycol and polybutylene glycol; and the like.

Furthermore, within the range where the thermoplastic polyester is substantially linear, a polyfunctional compound such as trimellitic acid, trimesic acid, pyromellitic acid, tricarballylic acid, glycerin, pentaerythritol, or trimethylolpropane may be copolymerized and also, a monofunctional compound such as benzoic acid or naphthic acid may be copolymerized.

One preferable example of the thermoplastic polyester for use in the invention is a thermoplastic polyester wherein its main repeating unit is constituted by ethylene terephthalate, more preferred is a linear copolymerized thermoplastic polyester containing an ethylene terephthalate unit in a ratio of 85 mol% or more and containing isophthalic acid, 2,6-dinaphthalenedicarboxylic acid, 1,4-cyclohexanedimethanol, and/or the like as copolymerization component (s), and particularly preferred is a linear thermoplastic polyester containing an ethylene terephthalate unit in a ratio of 95 mol% or more.

Examples of these linear thermoplastic polyesters include polyethylene terephthalate (hereinafter, abbreviated as PET), poly(ethylene terephthalate-ethylene isophthalate) copolymer, poly(ethylene terephthalate-1,4-cyclohexanedimethylene terephthalate) copolymer, poly(ethylene terephthalate-ethylene 2,6-naphthlate) copolymer, poly(ethylene terephthalate-dioxyethylene terephthalate) copolymer, and the like.

Further, one preferable example of the thermoplastic polyester for use in the invention is a thermoplastic polyester wherein its main repeating unit is constituted by ethylene-2,6-naphthalate, more preferred is a linear copolymerized thermoplastic polyester containing an ethylene-2,6-naphthalate unit in a ratio of 85 mol% or more, and particularly preferred is a linear thermoplastic polyester containing an ethylene-2,6-naphthalate unit in a ratio of 95 mol% or more.

Examples of these linear thermoplastic polyesters include polyethylene-2,6-naphthalate, poly(ethylene-2,6-naphthalate-ethylene terephthalate) copolymer, poly(ethylene-2,6-naphthalate-ethylene isophthalate) copolymer, poly (ethylene-2,6-naphthalate-dioxyethylene-2,6-naphthlate) copolymer, and the like.

Other preferable examples of the thermoplastic polyester for use in the invention include a linear thermoplastic polyester containing a propylene terephthalate unit in a ratio of 85 mol% or more, a linear thermoplastic polyester containing a 1,4-cyclohexanedimethylene terephthalate unit in a ratio of 85 mol% or more, or a linear thermoplastic polyester containing a butylene terephthalate unit in a ratio of 85 mol% or more.

The thermoplastic polyesters mentioned above can be produced according to production processes hitherto known. Namely, in the case of PET, it can be produced according to a process of direct esterification wherein terephthalic acid, ethylene glycol, and, if necessary, the above copolymerization component(s) are directly reacted and water is removed by evaporation to effect esterification and then polycondensation is carried out under reduced pressure using one or more compounds selected from an Sb compound, a Ge compound, a Ti compound, and an Al compound as a polycondensation catalyst or a process of transesterification wherein dimethyl terephthalate, ethylene glycol, and, if necessary, the above copolymerization component(s) are reacted in the presence of a transesterification catalyst and methyl alcohol is removed by evaporation to effect transesterification and then polycondensation is carried out under reduced pressure using one or more compounds selected from an Sb compound, a Ge compound, a Ti compound, and an Al compound as a polycondensation catalyst.

Furthermore, solid-phase polymerization may be carried out in order to increase intrinsic viscosity and lower the contents of formaldehyde and acetaldehyde and the content of cyclic ester trimer.

The above esterification reaction, transesterification reaction, melt polycondensation reaction, and solid-phase polymerization reaction may be carried out in a batch-type reaction apparatus or may be carried out in a continuous reaction apparatus. In any of these methods, the melt polycondensation reaction may be carried out in one step or separately in multi steps. The solid-phase polymerization reaction can be carried out in a batch-type reaction apparatus or a continuous reaction apparatus as in the case of the melt polycondensation reaction. The melt polycondensation and solid-phase polymerization may be carried out successively or separately.

The Sb compound for use in the production of the thermoplastic polyester for use in the invention includes antimony trioxde, antimony acetate, antimony tartrate, antimony potassium tartrate, antimony oxychloride, antimony glycolate, antimony pentoxide, triphenylantimony, and the like. The Sb compound is preferably added so as to be 250 ppm as an Sb remaining amount in a formed polymer. Preferable upper limit is 200 ppm, more preferable upper limit is 190 ppm, and more preferable upper limit is 180 ppm. When the content of the antimony atom remaining in the polyester for use in the invention is more than 250 ppm, a blackish appearance is apt to occur in the molded articles obtained from the polyester composition of the invention and transparency thereof is poor in some cases. Preferable lower limit is 50 ppm and more preferable lower limit is 70 ppm. When it is less than 50 ppm, the polycondensation reaction of the polyester proceeds slowly and productivity becomes poor, so that the case is sometimes not practical.

The Ge compound for use in the production of the thermoplastic polyester for use in the invention includes amorphous germanium dioxide, crystalline germanium dioxide, germanium chloride, germanium tetraethoxide, germanium tetra-n-butoxide, germanium phosphite, and the like. In the case that the Ge compound is used, the amount to be used is from 5 to 150 ppm, preferably from 10 to 100 ppm, more preferably from 15 to 70 ppm as a Ge remaining amount in the thermoplastic polyester.

The Ti compound for use in the production of the thermoplastic polyester for use in the invention includes tetraalkyl titanates such as tetraethyl titanate, tetraisopropyl titanate, tetra-n-propyl titanate, and tetra-n-butyl titanate and partial hydrolysates thereof; titanyl oxalate compounds such as titanyl oxalate, titanyl ammonium oxalate, titanyl sodium oxalate, titanyl potassium oxalate, titanyl calcium oxalate, and titanyl strontium oxalate; titanium trimellitate, titanium sulfate, titanium chloride, and the like. The Ti compound is added so as to be in the range of 0.1 to 10 ppm as a Ti remaining amount in a formed polymer.

Further, the Al compound for use in the production of the thermoplastic polyester for use in the invention specifically includes carboxylate salts such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, and aluminum salicylate; inorganic acid salts such as aluminum chloride, aluminum hydroxide, aluminum hydroxide chloride, aluminum polychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum iso-propoxide, aluminum n-butoxide, and aluminum t-butoxide; aluminum chelate compounds such as aluminum acetylacetonate, aluminum acetylacetate, aluminum ethylacetoacetate, and aluminum ethylacetoacetate di-isopropoxide; organoaluminum compounds such as trimethylaluminum and triethylaluminum and partial hydrolysates thereof; aluminum oxide, and the like. Of these, carboxylate salts, inorganic acid salts, and chelate compounds are preferred. Of these, furthermore, basic aluminum acetate, aluminum chloride, aluminum hydroxide, aluminum hydroxide chloride, and aluminum acetylacetonate are particularly preferred. The Al compound is added so as to be in the range of 5 to 200 ppm as a Al remaining amount in a formed polymer.

Further, in the production of the thermoplastic polyester for use in the invention, an alkali metal compound or an alkaline earth metal compound may be used in combination. The alkali metal compound or the alkaline earth metal compound includes carboxylate salts such as acetates, alkoxides, and the like of these elements and is added to a reaction system as a powder, an aqueous solution, an ethylene glycol solution, or the like. The alkali metal compound or the alkaline earth metal compound is added so as to be in the range of 1 to 50 ppm as a remaining amount of these elements in a formed polymer.

The above catalyst compound can be added at any stage of the above thermoplastic polyester-forming reaction step.

Further, various phosphorus compounds can be used as stabilizers. The phosphorus compounds for use in the invention include phosphoric acid, phosphorous acid, phosphonic acid, and derivatives thereof. Specific examples include phosphoric acid, trimethyl phosphate, triethyl phosphate, tributyl phosphate, triphenyl phosphate, monomethyl phosphate, dimethyl phosphate, monobutyl phosphate, dibutyl phosphate, phosphorous acid, trimethyl phosphite, triethyl phosphite, tributyl phosphite, methylphosphonic acid, dimethyl methylphosphonate, dimethyl ethylphosphonate, dimethyl phenylphosphonate, diethyl phenylphosphonate, diphenyl phenylphosphonate, and the like, and they may be used solely or two or more of them may be used in combination. The phosphorus compound may be added at any stage of the above thermoplastic polyester-forming reaction step so as to be in the range of 5 to 100 ppm as a phosphorus remaining amount in a formed polymer.

The intrinsic viscosity of the thermoplastic polyester, particularly the thermoplastic polyester comprising ethylene terephthalate as a main repeating unit is in the range of preferably 0.55 to 1.50 dl/g, more preferably 0.58 to 1.30 dl/g, further preferably 0.60 to 0.90 dl/g. When the intrinsic viscosity is less than 0.55 dl/g, mechanical properties of the resulting packaging material or the like are poor. Further, in the case that it exceeds 1.50 dl/g, there arise problems that free low-molecular-weight compounds affecting flavor retention increase, packaging material is colored yellow, and the like since a resin temperature becomes high at its melting by means of a molding machine or the like to induce severe thermal decomposition.

Further, the intrinsic viscosity of the thermoplastic polyester for use in the invention, particularly the thermoplastic polyester comprising ethylene-2,6-naphthalate as a main repeating unit is in the range of 0.40 to 1.00 dl/g, preferably 0.42 to 0.95 dl/g, further preferably 0.45 to 0.90 dl/g. When the intrinsic viscosity is less than 0.40 dl/g, mechanical properties of the resulting packaging material or the like are poor. Further, in the case that it exceeds 1.00 dl/g, there arise problems that free low-molecular-weight compounds affecting flavor retention increase, packaging material is colored yellow, and the like since a resin temperature becomes high at its melting by means of a molding machine or the like to induce severe thermal decomposition.

The shape of chips of the thermoplastic polyester for use in the invention may be any of cylindrical, rectangular, spherical, flat, or the like shape. Its average particle size is in the range of usually 1.3 to 5 mm, preferably 1.5 to 4.5 mm, further preferably 1.6 to 4.0 mm. For example, in the case of cylindrical shape, chips having a length of 1.3 to 4 mm and a diameter of 1.3 to 4 mm are practical. In the case of spherical particles, it is practical that the maximum particle size is from 1.1 to 2.0 times larger than the average particle size and the minimum particle size is 0.7 time or more compared to the average particle size. Further, the weight of the chips is practically in the range of 10 to 30 mg/chip.

Further, the content of the cyclic ester trimer in the thermoplastic polyester for use in the invention is preferably 0.70% by weight or less, more preferably 0.60% by weight or less, further preferably 0.50% by weight or less, particularly preferably 0.45% by weigth or less. In the case that a thermally resistant blow-molded article or the like is molded from the thermoplastic polyester of the invention, when a polyester having a cyclic ester trimer content exceeding 0.70% by weight is used, the attachment of oligomers onto heated mold surface rapidly increases and transparency of the resulting blow-molded article becomes extremely bad. Further, in the case of preparing a sheet-like article, only a sheet-like article having bad surface conditions and poor transparency is obtained owing to severe fouling of cooling rolls and touch rolls. In this connection, the cyclic ester trimer means a cyclic ester trimer comprising terephthalic acid and ethylene glycol.

Further, the thermoplastic polyester for use in the invention preferably exhibits an increase of the cyclic ester trimer of 0.4% by weight during melt treatment at 290°C for 30 minutes. Such a polyester can be produced by deactivating a polycondensation catalyst remaining in the polyester obtained after melt polycondensation or after solid-phase polymerization.

As a method for deactivating the polycondensation catalyst in the polyester, there may be mentioned a method of bringing the polyester chips into contact with water or water vapor or a gas containing water vapor after melt polycondensation or after solid-phase polymerization.

These methods are described in detail in JP 3-174441 A, JP 2000-72867 A, and so on, and the production can be effected using the methods.

Further, as an alternative method for deactivating the polycondensation catalyst, there may be mentioned a method of deactivating the polymerization catalyst by adding a phosphorus compound to a melt of the polyester after melt polycondensation or after solid-phase polymerization and mixing them.

In the case of a melt polycondensation polyester, there may be mentioned a method of deactivating the polycondensation catalyst by mixing the polyester after completion of the melt polycondensation reaction with a polyester resin containing the phosphorus compound in an instrument such as a line mixer capable of mixing them at a melt state.

Further, as methods of blending a solid phase polymerization polyester with the phosphorus compound, there may be mentioned a method of dry-blending the solid-phase polymerization polyester with a phosphorus compound and a method of deactivating the polycondensation catalyst by blending the polyester with a predetermined amount of a phosphorus compound by mixing a polyester masterbatch chips blended with the phosphorus compound through melt-kneading and solid-phase polymerization polyester chips, followed by melting them in an extruder or a molding machine.

The phosphorus compound to be used includes phosphoric acid, phosphorous acid, phosphonic acid, and derivatives thereof. Specific examples include phosphoric acid, trimethyl phosphate, triethyl phosphate, tributyl phosphate, triphenyl phosphate, monomethyl phosphate, dimethyl phosphate, monobutyl phosphate, dibutyl phosphate, phosphorous acid, trimethyl phosphite, triethyl phosphite, tributyl phosphite, methylphosphonic acid, dimethyl methylphosphonate, dimethyl ethylphosphonate, dimethyl phenylphosphonate, diethyl phenylphosphonate, diphenyl phenylphosphonate, and the like, and they may be used solely or two or more of them may be used in combination.

In general, the thermoplastic polyester contains a considerable amount of a fine powder, namely fine, which is generated during the production step and whose copolymerization components and content of the copolymerization components are identical to those of the thermoplastic polyester chips. Such a fine has a property of accelerating crystallization of the thermoplastic polyester. When it is present in a large amount, there arise problems that transparency

of the molded articles molded from the above polyester composition containing such a fine becomes extremely bad and, in the case of a bottle, a shrunken amount at crystallization of the bottle mouth part exceeds a prescribed range, so that the bottle cannot be hermetically sealed with a cap. Therefore, it is desirable that the content of the fine in the thermoplastic polyester for use in the invention is 1000 ppm or less, preferably 500 ppm or less, more preferably 300 ppm or less, particularly preferably 200 ppm or less, most preferably 100 ppm or less.

<Partially aromatic polyamide>

The partially aromatic polyamide according to the invention is a polyamide comprising a unit derived from an aliphatic dicarboxylic acid and an aromatic diamine as a main constituting unit or a polyamide comprising a unit derived from an aromatic dicarboxylic acid and an aliphatic diamine as a main constituting unit.

The aromatic dicarboxylic acid component constituting the partially aromatic polyamide according to the invention includes terephthalic acid, isophthalic acid, phthalic acid, 2,6-naphthalenedicarboxylic acid, diphenyl-4,4'-dicarboxylic acid, diphenoxyethanedicarboxylic acid, and functional derivatives thereof.

As the aliphatic dicarboxylic acid component constituting the partially aromatic polyamide according to the invention, a linear aliphatic dicarboxylic acid is preferred and a linear aliphatic dicarboxylic acid containing an alkylene group having 4 to 12 carbon atoms is particularly preferred. Examples of the linear aliphatic dicarboxylic acid include adipic acid, sebacic acid, malonic acid, succinic acid, glutaric acid, pimelic acid, suberic acid, azelaic acid, undecanedioic acid, dodecanedioic acid, dimer acid, and functional derivatives thereof.

The aromatic diamine component constituting the partially aromatic polyamide according to the invention includes m-xylylenediamine, p-xylylenediamine, p-bis-(2-aminoethyl)benzene, and the like.

The aliphatic diamine component constituting the partially aromatic polyamide according to the invention is an aliphatic diamine having 2 to 12 carbon atoms or a functional derivative thereof. The aliphatic diamine may be a linear aliphatic diamine or a chain-like aliphatic diamine having a branch. Specific examples of such a linear aliphatic diamine include aliphatic diamines such as ethylenediamine, 1-methylethylenediamine, 1,3-propylenediamine, tetramethylenediamine, pentamethylenediamine, hexamethylenediamine, heptamethylenediamine, octamethylenediamine, nonamethylenediamine, decamethylenediamine, undecamethylenediamine, and dodecamethylenediamine.

Further, as the dicarboxylic acid component constituting the partially aromatic polyamide according to the invention, an alicyclic dicarboxylic acid can be used in addition to the aromatic dicarboxylic acid and the aliphatic dicarboxylic acid. The alicyclic dicarboxylic acid includes alicyclic dicarboxylic acids such as 1,4-cyclohexanedicarboxylic acid, hexahydroterephthalic acid, and hexahydroisophthalic acid.

furthermore, as the diamine component constituting the partially aromatic polyamide according to the invention, an alicyclic diamine can be used in addition to the aromatic diamine and the aliphatic diamine. The alicyclic diamine includes alicyclic diamines such as cyclohexanediamine and bis-(4,4'-aminohexyl)methane.

In addition to the above diamines and dicarboxylic acids, use can be made of lactams such as ε-caprolactam and lauroylactam, aminocarboxylic acids such as aminocaproic acid and aminoundecanoic acid, aromatic aminocarboxylic acids such as p-aminomethylbenzoic acid, and the like as copolymerization components. In particular, use of ε-caprolactam is desirable.

A preferable example of the partially aromatic polyamide according to the invention is a m-xylylene group-containing polyamide containing a constituting unit derived from m-xylylenediamine or a mixed xylylenediamine containing m-xylylenediamine and p-xylylenediamine whose amount is 30% or less of the whole amount and an aliphatic dicarboxylic acid in a ratio of at least 20 mol% or more, further preferably 30 mol% or more, particularly preferably 40 mol% or more in the molecular chain.

Further, the partially aromatic polyamide according to the invention may contain a constituting unit derived from a polybasic carboxylic acid having tribasicity or higher basicity, such as trimellitic acid and pyromellitic acid, within a range where the polyamide is substantially linear.

Examples of these polyamides include homopolymers such as poly(m-xylyleneadipamide), poly(m-xylylenesebacamide), and poly(m-xylylenesberamide), and m-xylylenediamine/adipic acid/isophthalic acid copolymer, m-xylylene/p-xylyleneadiamide copolymer, m-xylylene/p-xylylenepiperamide copolymer, m-xylylene/p-xylyleneazelamide copolymer, m-xylylenediamine/adipic acid/isophthalic acid/ε-caprolactam copolymer, m-xylylenediamine/adipic acid/isophthalic acid/ω-aminocaproic acid copolymer, and the like.

Further, other preferable example of the partially aromatic polyamide according to the invention is a polyamide containing a constituting unit derived from an aliphatic diamine and at least one acid selected from terephthalic acid and isophthalic acid in a ratio of at least 20 mol% or more, further preferably 30 mol% or more, particularly preferably 40 mol% or more in the molecular chain.

Examples of these polyamides include polyhexamethyleneterephthalamide, polyhexamethyleneisophthalamide, hexamethylenediamine/terephthalic acid/isophthalic acid copolymer, polynanomethyleneterephthalamide, polynanomethyleneisophthalamide, nanomethylenediamine/terephthalic acid/isophthalic acid copolymer, nanomethylenediamine/terephthalic acid/adipic acid copolymer, and the like.

Further, other preferable example of the partially aromatic polyamide according to the invention is a polyamide containing a constituting unit derived from an aliphatic diamine and at least one acid selected from terephthalic acid and isophthalic acid, which is obtained using, in addition to the aliphatic diamine and at least one acid selected from terephthalic acid and isophthalic acid, a lactam such as ε-caprolactam or laurolactam, an aminocarboxylic acid such as aminocaproic acid or aminoundecanoic acid, an aromatic aminocarboxylic acid such as p-aminomethylbenzoic acid as a copolymerization component in a ratio of at least 20 mol% or more, further preferably 30 mol%, particularly preferably 40 mol% or more in the molecular chain.

Examples of these polyamides include hexamethylenediamine/terephthalic acid/ε-caplolactam copolymer, hexamethylenediamine/isophthalic acid/ε-caplolactam copolymer, hexamethylenediamine/terephthalic acid/adipic acid/ε-caplolactam copolymer, and the like.

The above partially aromatic polyamide can be produced according to a method for polycondensation at a melt state by heating an aqueous solution of an aminocarboxylic acid salt formed from an diamine and a dicarboxylic acid under elevated pressure and under normal pressure while removing water and water formed during the polycondensation reaction, a method for polycondensation by heating an diamine and an dicarboxylic acid to react them directly at a melt state under normal pressure or successively under vacuum, or the like method. Further, by solid-phase polymerization of chips of the above polyamides obtained by these melt polymerization reactions, partially aromatic polyamides having higher viscosity can be obtained.

The above polycondensation reactions for the partially aromatic polyamides may be carried out in a batch-type reaction apparatus or in a continuous reaction apparatus.

At the production of the partially aromatic polyamide for use in the invention, it is preferable to add an alkali metal-containing compound represented by the following chemical formula (A) in order to enhance thermal stability and to prevent gel formation. The content of the alkali metal atom in the above partially aromatic polyamide is preferably within the range of 1 to 1000 ppm. It is desirable that the lower limit of the content of the alkali metal atom in the above partially aromatic polyamide is 10 ppm, further 20 ppm, particularly 30 ppm or more and it is desirable that the upper limit is 900 ppm, further 800 ppm, particularly 750 ppm.

$$Z\text{-}OR_8 \qquad (A)$$

wherein Z represents an alkali metal and $R_8$ represents a hydrogen atom, an alkyl group, an aryl group, a cycloalkyl group, $-C(O)CH_3$, or -C(O)OZ' wherein Z' represents a hydrogen atom or an alkali metal.

The alkali compound represented by the chemical formula (A) includes sodium hydroxide, sodium methoxide, sodium ethoxide, sodium propoxide, sodium butoxide, potassium methoxide, lithium methoxide, sodium acetate, sodium carbonate, alkaline earth compounds including alkaline earth metals, and the like but is not limited to these compounds.

Further, at the production of the above partially aromatic polyamide, it is preferable to effect the polymerization with adding a phosphorus compound as a stabilizer for preventing gel formation owing to thermal degradation.

When the content of phosphorus atom derived from the above phosphorus compound in the partially aromatic polyamide for use in the invention is referred to as X, X is preferably in the range of $0 < X \leq 500$ ppm. The lower limit is preferably 0.1 ppm, more preferably 1 ppm, further preferably 5 ppm. The upper limit is preferably 400 ppm, more preferably 300 ppm, further preferably 250 ppm. When X is 0, i.e., no phosphorus atom is contained, the effect of preventing gel formation is poor. On the other hand, when X is larger than the above range, a limit for the effect of preventing gel formation is observed and also the case is not economical. Furthermore, there is a case that Sb in the catalyst is reduced to metal Sb by a reducing action of phosphorus to decrease the color-L value. In order to increase the color-L value, it is preferable to lower the phosphorus content in the case that an Sb amount is large.

As the phosphorus compound to be added into the above partially aromatic polyamide, at least one compound selected from compounds represented by the following chemical formulae (B-1) to (B-4):

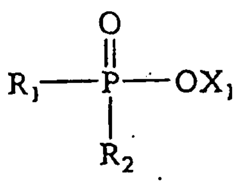

(B-1)

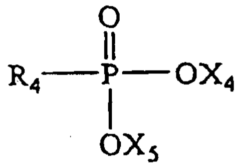

(B − 2)

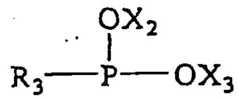

(B − 3)

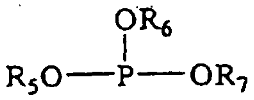

(B − 4)

wherein $R_1$ to $R_7$ each represents a hydrogen atom, an alkyl group, an aryl group, a cycloalkyl group, or an arylalkyl group and $X_1$ to $X_5$ each represents a hydrogen atom, an alkyl group, an aryl group, a cycloalkyl group, an arylalkyl group, or an alkali metal, or one of $X_1$ to $X_5$ and one of $R_1$ to $R_7$ may be combined with each other to form a ring structure.

The phosphinic acid represented by the chemical formula (B-1) includes dimtheylphoshinic acid, phenylmethylphosphinic acid, hypophosphorous acid, sodium hypophosphite, potassium hypophosphite, lithium hypophosphite, ethyl hypophosphite, a compound of

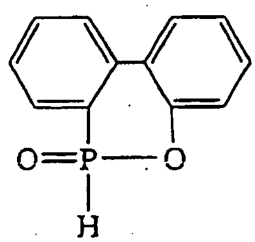

or

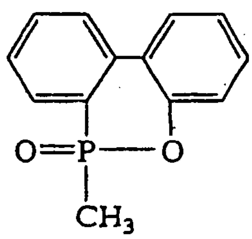

and hydrolysates thereof, condensates of the above phosphinic acid compounds, and the like.

The phosphonous acid represented by the chemical formula (B-2) includes phenylphosphonous acid, sodium phenylphosphonite, potassium phenylphosphonite, lithium phenylphosphonite, ethyl phenylphosphonite, and the like.

The phosphonic acid represented by the chemical formula (B-3) includes phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, and the like.

The phosphorous acid represented by the chemical formula (B-4) includes phosphorous acid, sodium hydrogen

phosphite, sodium phosphite, triethyl phosphite, triphenyl phosphite, pyrophosphorous acid, and the like.

The content of total alkali metals in the partially aromatic polyamide for use in the invention (total amount of the alkali metal atom contained in the above phosphorus stabilizer and the alkali metal atom contained in the above alkali metal compound) is preferably from 1.0 to 6.0 molar equivalents to the content of the phosphorus atom in the polyamide. The lower limit is more preferably 1.5 molar equivalents, further preferably 2.0 molar equivalents, particularly preferably 2.3 molar equivalents, most preferably molar equivalents. The upper limit is more preferably 5.5 molar equivalents, further preferably 5.0 molar equivalents. When the content of total alkali metals is less than 1.0 molar equivalent to the content of the phosphorus atom, gel formation is apt to be accelerated. On the other hand, when the content of total alkali metals is larger than 6.0 molar equivalents to the content of the phosphorus atom, a polymerization rate becomes low, the viscosity does not sufficiently increase, and gel formation is accelerated all the more particularly in a system under reduced pressure, so that the case is not economical.

The compounds represented by the above chemical formulae (B-1) to (B-4) for use in the invention may be used solely but they are preferably used in combination since thermal stability of the polyester composition is improved.

For blending the partially aromatic polyamide for use in the invention with the above phosphorus compound or the above alkali metal-containing compound, these compounds may be added to raw materials before polyamide polymerization or during the polymerization or may be melt-mixed into the above polymer.

Further, these compounds may be added at once or may be added separately.

The relative viscosity of the partially aromatic polyamide for use in the invention is in the range of 1.3 to 4.0, preferably 1.5 to 3.0, more preferably 1.7 to 2.5, and further preferably 1.8 to 2.0. When the relative viscosity is 1.3 or less, the molecular weight is too small, so that mechanical properties of the packaging material comprising the polyester composition of the invention are sometimes poor. To the contrary, when the relative viscosity is 4.0 or more, polymerization of the above polyamide requires a long time, which sometimes not only causes deterioration and undesirable coloring of the polymer but also reduces productivity resulting in a factor of cost increase.

When the concentration (μmol/g) of the terminal amino group in the partially aromatic polyamide for use in the invention is referred to as AEG and the concentration (μmol/g) of the terminal carboxyl group in the partially aromatic polyamide is referred to as CEG, the ratio of AEG to CEG (AEG/CEG) is preferably 1.05 or more. When the ratio of the concentration of the terminal amino group to the terminal carboxyl group (AEG/CEG) in the partially aromatic polyamide is less than 1.05, flavor retention of the polyester packaging material of the invention is poor and hence such a polyester packaging material is sometimes poor in practicality as containers for low flavor drinks. When the ratio of the concentration of the terminal amino group to the terminal carboxyl group (AEG/CEG) in the partially aromatic polyamide exceeds 20, the resulting polyester packaging material is severely colored and has no commercial value, so that the case is not preferable.

It is noted that the above partially aromatic polyamide contains cyclic oligomers such as a cyclic amide monomer, a cyclic amid dimer, a cyclic amide trimer, and a cyclic amide tetramer comprising the dicarboxylic acid and the diamine to be used as starting materials, unreacted monomers such as the above dicarboxylic acid and the above diamine, and linear oligomers such as a linear dimer and a linear trimer comprising the above dicarboxylic acid and the above diamine. The contents of them may vary depending on the polycondensation method, the polycondensation conditions, or the molecular weight of the polyamide formed, but in one example, the contents are as follows: from 0.2 to 2.0% by weight for the cyclic amide monomer, from 0.1 to 2.0% by weight for the cyclic amide dimer, from 0.1 to 1.0% by weight for the cyclic amide trimer, and from 0.005 to 0.5% by weight for the cyclic amide tetramer, an order of 1 to 5000 ppm for linear oligomers, and an order of 0.1 to 2000 ppm for unreacted monomers.

Herein, in the case that the partially aromatic polyamide is a polyamide comprising m-xylylenediamine and adipic acid, the chemical formula of the cyclic oligomers is represented by the following formula and the case where n is 1 is a cyclic amide monomer:

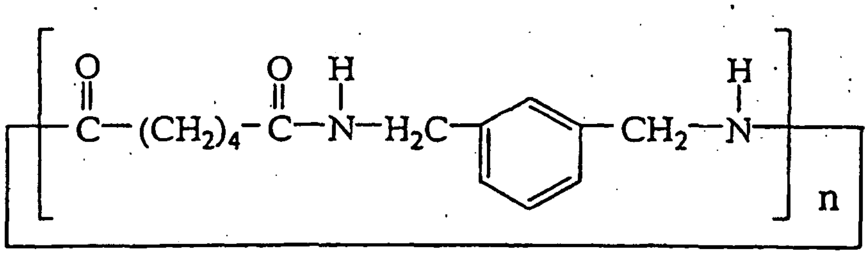

wherein n represents an integer of 1 to 4.

It is preferable that the content of the cyclic amide monomers in the partially aromatic polyamide is 0.9% by weight or less, preferably 0.8% by weight or less, further preferably 0.6% by weight or less.

When a partially aromatic polyamide having a cyclic amide monomer content exceeding 0.9% by weight is used, flavor retention of contents filled into a molded article obtained therefrom becomes bad and mold fouling is very severe which is generated by attaching foreign matter to the inner surface of the mold during the molding of the molded article and the exhaust outlet and exhaust pipe of gases of the mold. In this connection, the content of the cyclic amide monomer herein means the content of the cyclic amide monomer contained in the polyamide. The lower limit of the content of the cyclic amide monomer is preferably 0.001 ppm from the economical viewpoint and the like. The cyclic amide monomer can be measured by a high-performance liquid chromatography to be described below.

The partially aromatic polyamide having a cyclic amide monomer content of 0.9% by weight or less can be, for example, produced as follows. Namely, the polyamide can be obtained by subjecting the polyamide chips obtained according to the above production process to heat treatment or extraction treatment with an alcohol such as methanol or ethanol or an aqueous methanol solution or an aqueous ethanol solution.

For example, the above amide chips are placed in a tank for heat treatment and 50% aqueous ethanol solution is added thereto, followed by treatment at about 50 to 60°C, the resulting chips being subjected to molding. Such heat treatment or the like may be carried out in a batch-type treating apparatus or in a continuous treating apparatus.

Further, the partially aromatic polyamide for use in the invention can be also obtained by changing the adding ratio of the diamine such as m-xylylenediamine to the dicarboxylic acid such as adipic acid at the polycondensation or by changing polycondensation conditions.

The tertiary nitrogen content of the partially aromatic polyamide constituting the polyester composition of the invention is preferably 2.0 mol% or less, more preferably 1.5 mol% or less, further preferably 1.0 mol% or less. A molded article obtained using a polyester composition containing a partially aromatic polyamide having a tertiary nitrogen content exceeding 2.0 mol% contains colored foreign matter due to gelled matter and is sometimes poor in color. Particularly in an oriented film or a biaxially oriented blow-molded article, the part where gelled matter is present is not normally oriented and remains thick, which causes unevenness of thickness. Thus, a large number of molded articles having no commercial value are sometimes produced to decrease process yields and, in the worst case, only the molded articles having no commercial value are obtained.

Further, the upper limit of the tertiary nitrogen content is preferably 0.001 mol%, more preferably 0.01 mol%, further preferably 0.05 mol%, particularly preferably 0.1 mol% for the reason of production. At the production of the partially aromatic polyamide having a tertiary nitrogen content of less than 0.001 mol%, there may sometimes arise problems in productivity, i.e., use of highly purified raw materials, necessity of a large amount of an anti-degradation agent, necessity of maintenance of a low polymerization temperature, and the like.

In this connection, the tertiary nitrogen herein means both of nitrogen based on an imino compound and nitrogen based on a tertiary amide and the tertiary nitrogen content is a content expressed by molar ratio (mol%) relative to the nitrogen based on a secondary amide (-NHCO-: an amide constituting a normal main chain).

In the case that a large number of imino groups are present in the polyamide, there is a case that the imino group moiety reacts with the terminal of the dicarboxylic acid to generate gelled mater and when a large amount of the tertiary amide is present in the polyamide, the gelled matter sometimes forms in a large amount

The shape of chips of the partially aromatic polyamide for use in the invention may be any of cylindrical, rectangular, spherical, flat plate, or the like shape. Its average particle size is in the range of usually 1.0 to 5 mm, preferably 1.2 to 4.5 mm, further preferably 1.5 to 4.0 mm. For example, in the case of cylindrical shape, chips having a length of 1.0 to 4 mm and a diameter of 1.0 to 4 mm are practical. In the case of spherical particles, it is practical that the maximum particle size is from 1.1 to 2.0 times larger than the average particle size and the minimum particle size is 0.7 time or more compared to the average particle size. Further, the weight of the chips is practically in the range of 5 to 30 mg/chip.

<Polyestercomposition>

The polyester composition of the invention may have a shape obtained by molding a melt mixture of the thermoplastic polyester and the partially aromatic polyamide. The state obtained by molding is not limited to strand-shape, chip-shape, and cylindrical shape and may be blow-molded article shape, sheet-shape, film-shape, and pulverized matter thereof and the shape is not particularly limited.

Further, the polyester composition may be a dry blend of the thermoplastic polyester and the partially aromatic polyamide or may be a dry blend of the thermoplastic polyester and a masterbatch containing the partially aromatic polyamide.

The mixing ratio of the above thermoplastic polyester and the partially aromatic polyamide constituting the polyester composition of the invention is 0.1 to 50 parts by weight, preferably 0.1 to 30 parts by weight of the partially aromatic polyamide per 100 parts by weight of the thermoplastic polyester. In the case that a polyester composition having a very little AA content and excellent in flavor retention is desired to obtain from the above polyester composition, the adding amount of the partially aromatic polyamide is desirably 0.1 part by weight or more, particularly preferably 0.5

part by weight or more and preferably less than 5 parts by weight, more preferably less than 2 parts by weight, further preferably less than 1 part by weight per 100 parts by weight of the thermoplastic polyester.

Further, in the case that a polyester composition extremely excellent in gas barrier properties, having transparency not impairing practicality, having a very little AA content, and excellent in flavor retention is desired to obtain from the above polyester composition, the adding amount is preferably 2 parts by weight or more, further preferably 3 parts by weight or more, particularly preferably 5 parts by weight or more and preferably 30 parts by weight or less, more preferably 25 parts by weight or less, further preferably 20 parts by weight or less per 100 parts by weight of the thermoplastic polyester.

When the mixing amount of the partially aromatic polyamide is less than 0.01 part by weight per 100 parts by weight of the thermoplastic polyester, the AA content of the resulting polyester composition is not reduced and flavor retention of contents of the polyester composition becomes very bad in some cases, so that the amount is not preferable. Further, when the mixing amount of the partially aromatic polyamide exceeds 30 parts by weight per 100 parts by weight of the thermoplastic polyester, transparency of the resulting polyester molded article becomes very bad and mechanical properties of the polyester packaging material decreases in some cases, so that the amount is not preferable.

Furthermore, a melt mixture of the thermoplastic polyester and the partially aromatic polyamide can be used as a masterbatch for mixing with the thermoplastic polyester. In the case of the use as the masterbatch, the ratio is preferably 3 to 50 parts by weight of the partially aromatic polyamide per 100 parts by weight of the thermoplastic polyester.

The polyester composition of the invention is characterized in that the content of an alkali metal atom in the polyester composition is within the range of 0.1 to 300 ppm.

The lower limit of the content of an alkali metal atom in the polyester composition is preferably 1 ppm, more preferably 5 ppm. Further, the upper limit of the content of an alkali metal atom in the polyester composition is preferably 270 ppm, more preferably 250 ppm, further preferably 200 ppm.

When the content of an alkali metal atom in the polyester composition is less than 0.1 ppm, at the production of molded articles using such a polyester composition, severe coloring may occur, burn lines and non-melted matter are apt to generate, and as a result, appearance of the polyester molded article becomes bad. On the other hand, when the content of an alkali metal atom in the polyester composition is larger than 300 ppm, burn lines and non-melted matter are hardly generated but transparency and flavor retention of the resulting molded article becomes bad, decrease in molecular weight occurs, and mechanical strength may decrease.

As a method for making the content of an alkali metal atom in the polyester composition within the range of 0.1 to 300 ppm, use can be made of a method of regulating the content of an alkali metal atom contained in the partially aromatic polyamide according to the amount of the partially aromatic polyamide to be used, a method of regulating the content of an alkali metal atom contained in the polyester, or the like method.

The content of an alkali metal atom in the above partially aromatic polyamide for use in the invention is determined by atomic absorption spectrometry, emission spectrometry, inductively coupled plasma (hereinafter, abbreviated as ICP) emission spectrometry, ICP mass spectrometry, fluorescent X-ray analysis, and the like, which can be chosen according to the concentration of the alkali metal atom.

Further, the polyester composition of the invention is characterized in that the content of phosphorus atom in the polyester composition is from 5 to 200 ppm.

The lower limit of the content of phosphorus atom in the polyester composition is preferably 6 ppm, more preferably 7 ppm, further preferably 8 ppm. Further, the upper limit of the content of phosphorus atom in the polyester composition is preferably 180 ppm, more preferably 160 ppm, further preferably 130 ppm.

When the content of phosphorus atom in the polyester composition is less than 5 ppm, at the production of a molded article using such a polyester composition, severe coloring may occur, burn lines and non-melted matter are apt to generate, and thermal degradation at molding occurs to a large extent. On the other hand, when the content of the phosphorus atom in the polyester composition is larger than 200 ppm, thermal stability is excellent and generation of burn lines and non-melted matter are hardly observed but transparency and flavor retention of the resulting molded article becomes bad in some cases.

As a method for making the content of phosphorus atom in the polyester composition within the range of 5 to 200 ppm, use can be made of a method of regulating the content of phosphorus atom contained in the partially aromatic polyamide according to the amount of the partially aromatic polyamide to be used, a method of regulating the content of phosphorus atom contained in the polyester, or the like method.

It is preferable that the Color-L value of the molded article obtained by injection molding of the polyester composition of the invention according to the measuring method (8) to be described below is 80.0 or more and the haze thereof is 20% or less. The Color-L value is more preferably 82.0 or more, further preferably 84.0 or more. Furthermore, the haze is more preferably 15% or less, further preferably 10% or less. When the Color-L value of the resulting molded article is less than 80.0 or the haze is more than 20%, not only transparency of the molded article is bad but also the appearance looks darkly, so that the value as a packaging material is poor in some cases.

When a polyester using an antimony catalyst is used as the polyester composition, as mentioned above, the

antimony is reduced to precipitate as metal antimony by the action of phosphorus, which results in darkly colored appearance in some cases. Therefore, a desirable result can be achieved by regulating the content of antimony and the content of phosphorus atom in the polyester composition.

Further, since the polyester has low compatibility with the partially aromatic polyamide, haze increases not only by the elevation of the content of the partially aromatic polyamide in the composition, the haze value increases but also by precipitation of metal antimony, clouding with excess phosphorus atom, a crystallization-accelerating effect by an alkali metal, a crystallization-accelerating effect of a resin fine powder called fine, and the like. Therefore, haze can be reduced to 20% or less by regulating the adding amount of the partially aromatic polyamide, the antimony content in the polyester composition, the content of phosphorus atom, the content of alkali metal atom, and the content of fine or the like. Further, a measure of enhancing compatibility by copolymerization of the partially aromatic polyamide with an aromatic dicarboxylic acid component or the like, a measure of making the refractive index of the polyester close to that of the partially aromatic polyamide, or the like measure are also effective.

It is preferred that the difference ($A_t$ - $A_0$) between the acetaldehyde content ($A_t$) (ppm) in the molded article obtained by injection molding of the polyester composition of the invention according to the method described in the following method (5) and the acetaldehyde content (Ao) (ppm) of the polyester composition before injection molding is 20 ppm or less, preferably 15 ppm or less, further preferably 10 ppm or less, most preferably 5 ppn or less. When the difference ($A_t$ - $A_0$) between the acetaldehyde contents before and after the injection molding exceeds 20 ppm, flavor retention of the resulting polyester packaging material becomes bad. Further, the lower limit of the difference ($A_t$ - $A_0$) between the acetaldehyde contents before and after the injection molding is 1 ppm. For reducing the difference less than the value, the production conditions of the polyester composition should be unproductive conditions and hence it is uneconomical.

The polyester composition having a difference ($A_t$ - $A_0$) between the acetaldehyde content ($A_t$) after the injection molding and the acetaldehyde content (Ao) before the injection molding of 20 ppm or less can be obtained by using a thermoplastic polyester whose acetaldehyde content is 5 ppm or less or a thermoplastic polyester whose acetaldehyde content is 10 ppm or less and whose remaining polycondensation catalyst is deactivated.

Further, the above polyester composition having a difference ($A_t$ - $A_0$) of 20 ppm or less can be also obtained by bringing a polyester composition comprising the thermoplastic polyester having an acetaldehyde content of 10 ppm or less and the partially aromatic polyamide with water, water vapor or a gas containing water vapor.

The acetaldehyde content in the polyester composition of the invention is 20 ppm or less, preferably 15 ppm or less, further preferably 10 ppm or less. When the acetaldehyde content in the polyester composition of the invention exceeds 20 ppm, flavor retention of the polyester composition becomes bad. Further, the lower limit of the acetaldehyde content in the polyester composition is 3 ppm and the reduction to less than the value is problematic since the molding therefor is molding with no thought of profit.

In the polyester composition of the invention, the increase ($\Delta$AA) (ppm) of the acetaldehyde content during melting treatment at 290°C for 30 minutes is preferably 20 ppm or less, more preferably 15 ppm or less, further preferably 13 ppm or less. When the increase ($\Delta$AA) (ppm) of the acetaldehyde content at the melting treatment exceeds 20 ppm, at molding of the polyester composition using recycled reusable materials such as used PET bottles in part, it becomes very difficult to reduce the AA content in the resulting polyester composition and also it becomes necessary to reduce extremely the mixing ratio of the recycled reusable materials to a virgin PET resin.

In addition, the formaldehyde content (hereinafter, sometimes abbreviated as FA) in the polyester composition of the invention is preferably 3 ppm or less, more preferably 2 ppm or less, further preferably 1 ppm or less. When the formaldehyde content in the polyester composition of the invention exceeds 3 ppm, flavor retention of the polyester composition becomes bad.

In the polyester composition of the invention, the content of a cyclic trimer derived from the polyester is preferably 0.7% by weight or less, more preferably 0.5% by weight or less.

For maintaining the content of the cyclic trimer derived from the thermoplastic polyester to 0.7% by weight or less, it is necessary to suppress the content of the above cyclic trimer to preferably 0.50% by weight or less, more preferably 0.45% by weight or less, further preferably 0.40% by weight or less. In the case that the polyester composition is thermally resistant blow-molded article, when the content of the cyclic trimer in the polyester composition exceeds 0.70% by weight, attachment of oligomers derived from the polyester such as the cyclic trimer to the surface of a heated mold increases with time, so that it takes a lot of effort to clean the mold and at the same time discontinuation of the molding results in economic loss. The lower limit is 0.10% by weight and reduction to less than the value is problematic since production conditions of the polyester with no thought of profit should be adopted.

Further, in the polyester composition of the invention, the increase of the cyclic ester trimer ($\Delta CT_2$) during melting treatment at 290°C for 30 minutes is preferably 0.40% by weight or less, more preferably 0.3% by weight or less.

For maintaining the increase of the above cyclic ester trimer ($\Delta CT_2$) during melting treatment at 290°C for 30 minutes to 0.40% by weight or less, it is necessary to use a thermoplastic polyester having an increase of the cyclic ester trimer ($\Delta CT_1$) during melting treatment at 290°C for 30 minutes of 0.40% by weight or less, preferably 0.35% by

weight or less, further preferably 0.30% by weight or less. When a thermoplastic polyester wherein the increase of the cyclic ester trimer ($\Delta CT_1$) during melting treatment at 290°C for 30 minutes exceeds 0.40% is used, the amount of the cyclic ester trimer increases at resin melting during the molding of the polyester composition and attachment of the oligomers to the surface of the heated mold rapidly increases, whereby transparency of the resulting blow-molded articles or the like becomes extremely bad.

The thermoplastic polyester wherein the increase of the cyclic ester trimer ($\Delta CT_1$) during melting treatment at 290°C for 30 minutes is 0.40% or less can be produced by deactivating the polycondensation catalyst remaining in the thermoplastic polyester obtained after melt polycondensation or after solid-phase polymerization. As a method for deactivating the polycondensation catalyst in the thermoplastic polyester, methods the same as those mentioned above can be employed.

In this connection, when the thermoplastic polyester is PET, the cyclic ester trimer means a cyclic trimer comprising terephthalic acid and ethylene glycol.

The content of the cyclic ester trimer derived from the thermoplastic polyester in the polyester composition of the invention is preferably 0.50% by weight or less, more preferably 0.45% by weight or less, further preferably 0.40% by weight or less. When the content of the cyclic ester trimer derived from the thermoplastic polyester in the polyester composition exceeds 0.50% by weight, attachment of the oligomers to the surface of the heated mold rapidly increases, whereby transparency of the resulting blow-molded articles becomes extremely bad and flavor retention becomes bad, so that the case is problematic.

The content of the cyclic amide monomer containing an m-xylylene group in the polyester composition of the invention is 0.3% by weight or less, preferably 0.28% by weight or less, further preferably 0.25% by weight or less. When the content of the above cyclic amide monomer in the polyester composition exceeds 0.3% by weight, flavor retention of contents filled in a polyester molded article becomes bad, so that the case is problematic.

For achieving it, it is preferable that the content of the cyclic amide monomer containing an m-xylylene group in the polyester composition of the invention is 0.3% by weight or less, preferably 0.28% by weight or less, further preferably 0.25% by weight or less.

When the content of the cyclic amide monomer exceeds 0.3% by weight, mold fouling becomes very severe which is formed by attaching foreign matter to the inner surface of the mold during the molding of the polyester composition having improved thermal resistance and the exhaust outlet and exhaust pipe of gases of the mold. The lower limit of the content of the cyclic amide monomer is preferably 0.001 ppm for the economical reason and the like. The cyclic amide monomer can be measured by a high-performance liquid chromatography to be described below.

The method for regulating the contents of the polyester composition and the cyclic amide monomer in the polyester composition of the invention is not particularly limited and, for example, it can be produced as follows. Namely, according to the blending amount of the partially aromatic polyamide to the thermoplastic polyester, it is achieved by using a partially aromatic polyamide having a reduced content of the cyclic amide monomer so that the contents of the polyester composition and the cyclic amide monomer in the polyester composition satisfies the value defined in claims of the invention. Further, it is also achieved by treating the polyester composition obtained from the polyester composition containing the partially aromatic polyamide or the polyester composition obtained from the above polyester composition with water, an organic solvent, or the like to extract and remove the above cyclic compound. The method for producing the partially aromatic polyamide having a reduced content of the above cyclic amide monomer is not limited and there may be mentioned extraction with water or an organic solvent, change of polycondensation conditions, thermal treatment under reduced pressure, and methods of combining these methods.

The intrinsic viscosity of the polyester composition of the invention is in the range of preferably 0.55 to 1.00 dl/g, more preferably 0.58 to 0.95 dl/g, further preferably 0.60 to 0.90 dl/g.

Furthermore, the polyester composition is a polyester composition comprising 100 parts by weight of a thermoplastic polyester, 0.1 to 50 parts by weight of a partially aromatic polyamide, and $5 \times 10^{-4}$ to 1 part by weight of an amino group-containing compound.

Examples of the amino group-containing compound include 1,8-diaminonaphthalate, 3,4-diaminobenzoic acid, 2-aminobenzamide, biuret, malonamide, salicylamide, salicylanilide, o-phenylenediamine, o-mercaptobenzamide, N-acetylglycineamide, 3-mercapto-1,2-propanediol, 4-amino-3-hydroxybenzoic acid, disodium 4,5-dihydroxy-2,7-naphthalenedisulfonate salt, 2,3-diaminopyridine, 2-aminobenzsulfonamide, 2-amino-2-methyl-1,3-propanediol, 4,4'-diaminodiphenylmethane, 4,4'-diaminodiphenyl ether, 4,4'-diaminodiphenyl sulfone, 2,2-bis (4-aminophenyl)propane, melamine, benzoguanamine, propioguanamine, stearoguanamine, spiroguanamine, stearylamine, lauroylamine, eicosylamine, spiroacetal diamine, polyoxyethylenediamine, amino group-terminated polyethers, e.g., aminoethyl etherified or aminopropyl etherified polyethylene glycol and/or polypropylene glycol, amino-terminated polyesters, e.g., aminoethyl etherified or aminopropyl etherified polyethylene adipate or sebacate, amino-terminated polyurethanes, amino-terminated polyureas, amino group-containing acylic resins, e.g., copolymers of amino group-containing acrylates or methacrylates such as 2-aminoethyl acrylate, 2-aminoethyl methacrylate, 3-aminoethyl acrylate, 3-aminoethyl methacrylate, N-(2-aminoethyl)aminoethyl methacrylate, and N-(2-aminoethyl)aminopropyl methacrylate with methyl acrylate, ethyl

acrylate, styrene, or the like, amino group-modified olefinic resins, e.g., polyethylene, polypropylene, and etylene-propylene copolymer graft-modified with amino group-containing acrylates or methacrylates, amino group-containing organopolysiloxanes, e.g., organopolysiloxanes containing 3-aminoalkylsiloxane unit and an unit such as dimethylsiloxane, diphenylsiloxane, or methylphenylsiloxane, primary amino group-containing melamine resins, primary amino group-containing guanamine resins, primary amino group-containing alkyd resins, e.g., amino alcohol-modified alkyd resins, agmatine, alkyne, octopamine, D-octopine, cadaverine, cystamine, cysteamine, spermidine, tyramine, spermine, tributamine, noradrenaline, histamine, bithiamine, hydroxytyramine, 5-hydroxytributamine, hypotaurine, azeserine, L-asparamine, L-aspartic acid, L-$\alpha$-aminobutyric acid, L-arginine, L-alloisoleucine, L-allothreonine, L-isoleucine, L-ethionine, L-ornithine, L-canavanine, L-carboxymethylcystein, L-kynurenine, glycine, L-glutamine, L-glutamic acid, creatinine, L-cystathionine, L-cysteine, L-cysteic acid, L-cystine, L-citrulline, 3,4-dihydroxyphenylalanine, L-3,5-diiodotyrosine, L-serine, L-tyroxine, L-tyrosine, L-tryptophan, L-threonine, norvaline, norleucine, L-valine, L-histidine, L-hydroxyproline, L-hydroxylysine, L-phenylalanine, L-$\alpha$-phenylglycine, L-homoserine, L-methionine, L-1-methylhistidine, L-lanthionine, L-lysine, L-leucine, actinomycin C1, apamin, eledoisin, oxytocin, gastrin II, L-carnosine, L-glutathione, L-$\gamma$-glutamyl-L-cysteine, L-cysteinylglycine, vasopressin, $\alpha$-melanotropin, insulin $\alpha$-chymotrypsin, glucagon, clupeine, corticotropin, subtilisin, secretin, cytochrome C, tyrocalcitonin, trypsin, papain, histone, ferredoxin, proinsulin, pepsin, hemoglobin, myoglobin, lactalbumin, and lysozyme.

As the polyester and the partially aromatic polyamide, those mentioned above can be used and also as the polyester composition, those mentioned above are preferable except that an amino group-containing compound is added.

The mixing amount of the amino group-containing compound is preferably $5 \times 10^{-3}$ or more, further preferably $1 \times 10^{-2}$ or more per 100 parts by weight of the polyester.

In the case of less than $5 \times 10^{-4}$, the AA content of the resulting molded article is not reduced and flavor retention of contents of the molded article becomes extremely bad in some case. Further, when the amount exceeds 1 part by weight, the resulting molded article is colored a color characteristic to the amino group-containing compound and is poor in practicality in some case.

Into the polyester composition of the invention, there may be blended, if necessary, other various additives such as a UV absorbent, an antioxidant, an oxygen absorbent, an oxygen trapping agent, a lubricant to be added externally or a lubricant precipitated internally during reaction, a releasing agent, a nucleic agent, a stabilizer, an antistatic agent, a dye, and a pigment which are known. Further, it is also possible to add a UV shielding resin, a thermally resistant resin, a recycled article from used polyethylene terephthalate bottles, and the like, in appropriate ratios.

Furthermore, in the case that the polyester composition of the invention is a film, in order to improve handling properties such as sliding properties, winding properties, and blocking resistance, it is possible to blend inorganic particles of calcium carbonate, magnesium carbonate, barium carbonate, calcium sulfate, barium sulfate, lithium phosphate, calcium phosphate, magnesium phosphate, or the like, organic salt particles of calcium oxalate or a terephthalate salt of calcium, barium, zinc, manganese, magnesium; or the like, or inert particles such as particles of crosslinked polymers, e.g., homopolymers or copolymers of vinyl monomers such as divinylbenzene, styrene, acrylic acid, or methacrylic acid.

Further, in order to accelerate crystallization, to accelerate crystallization rate at a mouth part at production of biaxially oriented blow molded bottles, and to stabilize it, the polyester composition may contain a polyolefin, a polyamide other than the partially aromatic polyamide, a polyoxymethylene, polybutylene terephthalate, or the like in an amount of 0.1 ppb to 1000 ppm. The lower limit of the content of these resin is preferably 0.5 ppb, more preferably 1 ppb and the upper limit is preferably 100 ppm, further preferably 1 ppm, particularly preferably 100 ppb.

The method for adding them has been described in detail in JP 2002-249573 A and so on, which are incorporated herein by reference.

The polyester composition of the invention can be obtained according to known production processes.

The following will describe a simple process for producing various polyester compositions in the case that the thermoplastic polyester is polyethylene terephthalate (PET) as a representative example.

The polyester composition of the invention can be obtained by mixing the above thermoplastic polyester with the above polyamide according to hitherto known methods. For example, there may be mentioned a composition obtained by dry-blending the above polyamide chips with the thermoplastic polyester chips in a tumbler, a V-type blender, Henschel mixer, or the like, a composition obtained by further melt-mixing of the dry-blended mixture in a single-screw extruder, twin-screw extruder, a kneader, or the like one or more times, a composition obtained by further solid- phase polymerization of the melted mixture under high vacuum or under an inert gas atmosphere, and the like composition.

Furthermore, the above polyamide may be used after pulverization. In particular, the pulverization is advantageous in the case of a composition where the above polyamide is used in a small amount. The particle size when pulverized is preferably about 10 mesh or less. Further, there may be mentioned a method of attaching a solution obtained by dissolving the polyamide in a solvent such as hexafluoroisopropanol, a method of bringing the above thermoplastic polyester into collision and contact with a member made of the above polyamide in a space where the above member is present to attach the above polyamide onto the surface of the above thermoplastic polyester chips, and the like method.

In the case that the polyester composition of the invention is a sheet-like article, it can be produced using a

general sheet-molding machine equipped with an extruder and die, for example.

Further, the sheet-like article can be also molded into a cup-like article or a tray-like article by pneumatic molding or vacuum molding. In addition, the polyester composition of the invention can be also used in the application of tray-like containers for cooking foods in a microwave range and/or an oven range or heating frozen foods. In this case, after the sheet-like article is molded into a tray shape, it is thermally crystallized to improve thermal resistance thereof.

In the case that the polyester composition of the invention is an oriented film, the sheet-like article obtained by injection molding or extrusion molding is molded using any orientation method among uniaxial orientation, successive biaxial orientation, and simultaneous biaxial orientation.

For the production of the oriented film, the orientation temperature is usually from 80 to 130°C. The orientation may be uniaxial or biaxial, but preferred is biaxial from a viewpoint of film practical properties. The orientation magnification is in the range of usually 1.1 to 10 times, preferably 1.5 to 8 times in the case of uniaxial orientation and is in the range of usually 1.1 to 8 times, preferably 1.5 to 8 times both in a longitudinal direction and in a transverse direction in the case of biaxial orientation. Further, the ratio of magnification in a longitudinal direction/magnification in a transverse direction is usually from 0.5 to 2, preferably from 0.7 to 1.3. The resulting oriented film can be also further thermally fixed to improve thermal stability and mechanical strength. The thermal fixing is carried out under tension at 120°C to 240°C, preferably from 150°C to 230°C, usually for several seconds to several hours, preferably for several tens of seconds to several minutes.

For the production of blow-molded articles, a preform obtained by molding the PET composition of the invention is subjected to orientation blow molding and an apparatus used in conventional blow molding of PET can be employed. Specifically, for example, a preform is once formed by injection molding or extrusion molding and directly or after processing of the mouth part and bottom part, it is reheated and subjected to biaxial orientation blow molding such as a hot parison method or a cold parison method. The molding temperature in this case, specifically temperatures at each part of the cylinder and the nozzle part of a molding machine are usually in the range of 260 to 310°C. The orientation temperature is usually from 70 to 120°C, preferably from 90 to 110°C and the orientation magnification may be usually in the range of 1.5 to 3.5 in the longitudinal direction and in the range of 2 to 5 times in the circumferential direction. The resulting blow-molded articles can be used as they are but in the case that drinks requiring filling while hot, such as fruit juice drinks and oolong tea, they are generally used after further thermal fixing treatment in the blow mold to impart thermal resistance. The thermal fixing is usually carried out under tension such as pneumatic one at 100°C to 200°C, preferably from 120°C to 180°C for several seconds to several hours, preferably for several seconds to several minutes.

Further, in order to impart thermal resistance to the mouth part, the mouth part of the preform obtained by injection molding or extrusion molding is crystallized in an oven equipped with a far-infrared or near-infrared heater or the mouth part after bottle molding is crystallized by the above heater.

Furthermore, the polyester composition of the invention may be one constituting layer of a laminated molded article, a laminated film, or the like. In particular, it is used as containers and the like in the laminated form with PET. Examples of the laminated molded article include a molded article of a two-layer structure composed of two layers of an outer layer comprising the polyester composition of the invention and an inner PET layer or of a two-layer structure composed of two layers of an inner layer comprising the polyester composition of the invention and an outer PET layer, a molded article of a three-layer structure composed of an intermediate layer comprising the polyester composition of the invention and outer and innermost layers of PET or of a three-layer structure composed of outer and innermost layers comprising the polyester composition of the invention and an intermediate PET layer, a molded article of a five-layer structure composed of intermediate layers comprising the polyester composition of the invention and outermost, central, and innermost layers of PET, and the like molded article. In the PET layer, the other gas barrier resin, a UV shielding resin, a heat-resistant resin, recycled articles from used polyethylene terephthalate bottles, and the like can be mixed and used in appropriate ratios.

In addition, examples of other laminated molded article include laminated molded articles with resins other than the thermoplastic polyester, such as polyolefins, and laminated molded articles with heterogeneous basal materials such as paper and metal plates.

The thickness of the above laminated molded article and the thickness of each layer are not particularly limited. Further, the above laminated molded article can be used as various shapes such as sheet-like articles, film-like articles, plate-like articles, blow-molded articles, and containers.

The production of the above laminated article can be carried out by co-extrusion using extruders and multilayer multi-kind dies whose number corresponds to the kinds of the resin layers or by co-injection using injectors and co-injection runners whose number corresponds to the kinds of the resin layers.

The polyester composition of the invention may be a film which is used to laminate one side or both sides of a metal plate to be laminated. As the metal plate to be used, there may be mentioned tin plate, tin-free steel, aluminum, and the like.

As lamination methods, conventionally known methods can be applied and are not particularly limited but it is preferable to carry out a thermal lamination method capable of achieving organic solvent-free lamination and thus

avoiding adverse effects on taste and smell of foods due to residual solvents. In particular, a thermal lamination method by energization processing of a metal plate is particularly recommended. Further, in the case of double-sided lamination, the lamination may be carried out simultaneously or successively.

In this connection, needless to say, the film can be laminated to the metal plate using an adhesive.

Further, a metal container is obtained by molding using the above laminated metal plate. The molding methods for the above metal containers are not particularly limited. Furthermore, the shape of the metal container is also not particularly limited but it is preferable to apply to so-called two-piece can which is manufactured by forming such as drawing forming, draw-ironing forming, and stretch draw forming. However, it is also possible to apply to so-called three-piece can suitable for filling foods such as retort foods and coffee drinks, into which contents are filled by winding up top and bottom caps.

Incidentally, the following will describe measuring methods of main characteristic values in the invention.

Best Mode for Carrying Out the Invention

The following will explain the invention more specifically with reference to Examples but the invention is not limited to these Examples. The following will describe measuring methods of main characteristic values in the present specification.

(Evaluation methods)

(1) Intrinsic viscosity (IV)

It was determined based on a solution viscosity at 30°C in a mixed solvent of 1,1,2,2-tetrachloroethane/phenol (weight ratio of 2:3) (the unit is dl/g).

(2) Diethylene glycol content copolymerized in polyester (hereinafter, referred to as "DEG content")

A polyester was decomposed by methanol and an amount of DEG was determined quantitatively, the content being indicated by a ratio to total glycol components (mol%).

(3) Content of cyclic ester trimer (hereinafter, referred to as "CT content") (% by weight)

Three hundred milligrams of a sample was dissolved in 3 ml of a mixed solution of hexafluoroisopropanol/chloroform (volume ratio of 2/3) and the resulting solution was further diluted by adding 30 ml of chloroform. Thereto was added 15 ml of methanol to precipitate a polymer, followed by filtration. The filtrate was evaporated to dryness and the residue was diluted with 10 ml of dimethylformamide, a cyclic ester trimer being determined quantitatively by high performance liquid chromatography.

(4) Acetaldehyde content (hereinafter referred to as "AA content") (ppm)

After a sample/distilled water = 1 g/2cm$^3$ was placed in a glass ampoule, inside of which had been substituted with nitrogen, the upper part of the ampoule was melt-sealed under a nitrogen seal and extraction treatment was conducted at 160°C for 2 hours. After cooling, acetaldehyde in the extract solution was measured by highly sensitive gas chromatography, the concentration being indicated by ppm.

(5) Formaldehyde content (hereinafter referred to as "FA content") (ppm)

After a sample/distilled water = 6 g/12 cm$^3$ was placed in a glass ampoule, inside of which had been substituted with nitrogen, the upper part of the ampoule was melt-sealed under a nitrogen seal and extraction treatment was conducted at 160°C for 2 hours, followed by cooling. Thereafter, formaldehyde in the extract solution was derivatized with dinitrophenylhydrazine, followed by measurement by highly sensitive gas chromatography. The concentration was indicated by ppm.

(6) Difference between acetaldehyde contents before and after injection molding (hereinafter referred to as "$A_t$ - $A_0$")

A molded plate with steps was injection-molded according to the method to be described in the following (17) and a sample was taken out of the plate having a thickness of 2 mm (A part in Fig. 1). The content of acetaldehyde ($A_t$) was determined according to the measuring method of (4) and then the difference between the acetaldehyde contents

before and after injection molding was determined according to the following equation.

Difference between the acetaldehyde contents before and after injection molding ($A_t$ - $A_0$) (ppm) = Acetaldehyde content in a molded plate with steps after injection molding ($A_t$) (ppm) - Acetaldehyde content in a dry polyester composition before injection molding ($A_0$) (ppm) (7) Increase of acetaldehyde content during melt treatment of polyester composition (hereinafter referred to as "ΔAA")

Three grams of a sample having a size of about 1 to 3 mm square was taken out of a polyester composition. The sample was placed in a test tube made of glass and vacuum-dried at about 50 to 70°C and then it was immersed in an oil bath at 290°C for 30 minutes to effect melt treatment. The increase of the acetaldehyde content during the melt treatment was determined according to the following equation.

The increase of the acetaldehyde content during melt treatment (ppm) = Acetaldehyde content after melt treatment (ppm) - Acetaldehyde content before melt treatment but after dried (ppm)

(8) Increase of cyclic ester trimer during melt treatment of polyester (hereinafter referred to as "$\Delta CT_1$ amount") (% by weight) and increase of cyclic ester trimer during melt treatment of polyester composition (hereinafter referred to as "$\Delta CT_2$ amount ") (% by weight)

Three grams of dried polyester chips or a polyester composition was placed in a test tube made of glass and immersed in an oil bath at 290°C for 30 minutes to effect melt treatment. The polyester composition was cut into a size of about 1 to 3 mm square and then subjected to measurement.

The increase of a cyclic ester trimer during melt treatment of polyester ($\Delta CT_1$ amount) and the increase of a cyclic ester trimer during melt treatment of a polyester composition ($\Delta CT_2$ amount) was determined according to the following equation.

Increase of cyclic ester trimer during melt treatment (% by weight) = Content of cyclic ester trimer after melt treatment (% by weight) - Content of cyclic ester trimer before melt treatment (% by weight)

(9) Content of cyclic amide monomer in m-xylylene group-containing polyamide and polyester packaging material (hereinafter referred to as "CM content") (% by weight)

One hundred milligrams of a sample was dissolved in 3 ml of a mixed solution of hexafluoroisopropanol/chloroform (volume ratio of 2/3) and then diluted by adding 20 ml of chloroform, followed by addition of 10 ml of methanol. The solution was concentrated on an evaporator and the residue was redissolved in 20 ml of dimethylformamide. After centrifugation and filtration, the content was quantitatively determined by high-performance liquid chromatography.

(10) Relative viscosity of m-xylylene group-containing polyamide (hereinafter referred to as "Rv")

A sample (0.25 g) was dissolved in 25 ml of 96% sulfuric acid and 10 ml of the solution was measured at 20°C in an Ostwalt viscometer tube, the viscosity being determined according to the following equation.

$$Rv = t/t_0$$

$t_0$: number of seconds necessary to drop solvent
t : number of seconds necessary to drop sample solution

(11) Content of sodium atom in m-xylylene group-containing polyamide, and polyester composition (hereinafter referred to as "Na content")

A sample was subjected to ashing decomposition in a platinum crucible and 6 mol/L hydrochloric acid was added thereto, followed by evaporation to dryness. The residue was dissolved with 1.2 mol/L hydrochloric acid and the content was quantitatively determined by atomic absorption analysis.

(12) Content of phosphorus atom (ppm) (hereinafter, the content of phosphorus atom in a polyester composition was referred to as "X" and the content of phosphorus atom in a polyester packaging material was referred to as "Y")

A sample was subjected to dry decomposition to ash in the presence of sodium carbonate or subjected to wet decomposition in a sulfuric acid-nitric acid-perchloric acid system or in a sulfuric acid-hydrogen peroxide solution system to convert phosphorus into orthophosphoric acid. Then, it was reacted with a molybdate salt in a 1 mol/L sulfuric acid

solution to form phosphomolybdic acid, which was reduced with hydrazine sulfate. The absorbance of the resulting heteropoly blue at 830 nm was measured by an absorptiometer (Shimadzu UV-150-02) to effect colorimetric quantitative determination.

(13) Quantitative determination of remaining-antimony atom in polyester (ppm)

After polyester chips were subjected to melt treatment at 300°C, antimony atom was quantitatively determined by fluorescent X-ray method.

(14) Measurement of content of fine

About 0.5 kg of a resin was placed on a sieve (diameter of 30 cm) wired with wire gauze having a nominal size of 1.7 mm in accordance with JIS-Z8801 and sieved at 1800 rpm for 1 minute by means of an oscillating sieve shaker SNF-7 manufactured by Teraoka. This operation was repeated to sieve 20 kg of the resin in total.

The fine sieved out under the sieve was washed with ion-exchange water and collected by filtration through G1 glass filter manufactured by Iwaki Glass. After they were dried at 100°C for 2 hours together with the glass filter, they were cooled and weighed. The same operations of washing with ion-exchange water and drying were repeated and it was confirmed to reach a constant weight. The weight of the fine was determined by subtracting the weight of the glass filter from the constant weight. The content of the fine was a quotient of the weight of the fine/the weight of total resin sieved.

(15) Evaluation of mold fouling

A predetermined amount of thermoplastic polyester chips dried in a dryer using nitrogen gas and a predetermined amount of m-xylylene group-containing polyamide chips dried in a dryer using nitrogen gas were dry-blended. Using the blend, a preform was obtained by molding at a resin temperature of 285°C by means of an injection-molding machine M-150C (DM) manufactured by Meiki Co., Ltd. After the mouth part of the preform was thermally crystallized by means of a mouth-part crystallizing apparatus made by us, the resulting preform was subjected to biaxial orientation blow molding using a orientation blow molding machine LB-01E manufactured by Corpoplast and subsequently thermally fixed in the mold set at about 145°C to obtain a 1000 $cm^3$ blow-molded article. Under the same conditions, 2000 pieces of the blow-molded articles were continuously obtained by the orientation blow molding and the surface states of the mold before and after the molding was visually observed and evaluated as follows.

AA: No change is observed before and after continuous molding test
A: Slight attached matter is observed after continuous molding test
B: Considerable attached matter is observed after continuous molding test
C: Extremely much attached matter is observed after continuous molding test

(16) Color tone (Color-L value)

A sample was cut out of the molded article (thickness of 2 mm) in the following (17) and measured by means of a color-difference meter TC-1500 MC88-type manufactured by Tokyo Denshoku Co., Ltd. Color-L value indicates white color when the value is close to 100 and also indicates gray to black when the value is close to 0. Further, at the measurement, the apparatus was sufficiently stabilized beforehand by being allowed to stand for 1 hour or more after power-on.

(17) Molding of molded plate with steps

In the molding of the molded plate with steps, polyester and m-xylylene group-containing polyamide chips dried under reduced pressure at 140°C for about 16 hours using a vacuum drier was subjected to injection molding by means of an injection molding machine M-150C (DM) manufactured by Meiki Co., Ltd. to form a molded plate with steps having a gate part (G) as shown in Figs. 1 and 2 and a thickness of 2 mm to 11 mm (thickness of A part = 2 mm, thickness of B part = 3 mm, thickness of C part = 4 mm, thickness of D part = 5 mm, thickness of E part = 10 mm, thickness of F part = 11 mm).

Polyester and m-xylylene group-containing polyamide chips dried under reduced pressure using a vacuum drier DP61-type manufactured by Yamato Scientific Co., Ltd. was used and the inside of a hopper for molding materials was purged with a dry inert gas (nitrogen gas) in order to prevent moisture absorption during the molding. The plasticizing conditions by the injection molding machine M-150C-DM were as follows: Rotation number of feed screw = 70%, rotation

number of screw = 120 rpm, Back pressure 0.5 MPa, and cylinder temperature was set at 45°C, 250°C, in order form just below the hopper, and 290°C at following parts including nozzle. As injection conditions, injection pressure and dwell pressure were regulated so that injection speed and dwell pressure speed were 20% and the weight of molded article was 146±0.2 g. At that time, the dwell pressure was regulated to a pressure 0.5 MPa lower than the injection pressure.

The upper limits of the injection time and dwell pressure time were set at 10 seconds and 7 seconds, respectively, and the cooling time was set at 50 seconds, the whole cycle time including the molded article-takeoff time being about 75 seconds.

The temperature of the mold was controlled by introducing a cooling water having a temperature of 10°C, the mold surface temperature at stable molding being about 22°C.

A test plate for evaluating characteristics of molded articles were optionally selected from molded articles obtained at 11th to 18th shot from the start of molding after introduction of molding material and resin substitution.

The plate having a thickness of 2 mm (A part in Fig. 1) was used for measurement of crystallization temperature (Tc1) during temperature elevation and the plate having a thickness of 5 mm (D part in Fig. 1) was used for haze (haze %) measurement.

(18) Transparency of blow-molded article

a) Non-heat resistant blow-molded article: An appearance of a blow-molded article molded according to the method described in Example 1 was visually observed and evaluated according to the following evaluation standards.
b) Heat resistant blow-molded article: An appearance of a blow-molded article obtained after the molding in (15) was visually observed and evaluated according to the following evaluation standards. Transparency for a short time was evaluated after 10 pieces molding and transparency after continuous molding was evaluated after 2000 pieces molding.

(Evaluation standards)

AA: Transparent
A: Transparent within a practical range and no observation of foreign matter such as non-melted matter
B: Transparent within a practical range but observation of foreign matter such as non-melted matter
C: Poor transparency, observation of coloring, or observation of non-melted matter

(19) Sensory test

a) Non-heat resistant blow-molded article: After cooling of boiled distilled water to 50°C, it was placed in a blow-molded article and retained for 30 minutes after hermetically sealed. Thereafter, the whole was allowed to stand at 50°C for 10 days and, after opened, a test on taste, smell, and the like was carried out. As a blank for comparison, distilled water was used. The sensory test was carried out by 10 panelists according to the following standards and comparison was conducted with average values.
b) Heat resistant blow-molded article: Boiled distilled water was placed in a blow-molded article and retained for 30 minutes after hermetically sealed. Thereafter, the whole was allowed to stand at 50°C for 5 days and, after opened, a test on taste, smell, and the like was carried out in a similar manner to the above.

(Evaluation standards)

AA: No strange taste and smell are felt.
A: Slight difference from blank is felt.
B: Difference from blank is felt.
C: Considerable difference from blank is felt.
CC: Very large difference from blank is felt. (20) Oxygen permeability ($cm^3$/one container·24 hr·atm).

It was measured at 20°C and 0% RH as a permeability per one 1000 $cm^3$ bottle by means of an oxygen permeability measuring apparatus OX-TRAN 100 manufactured by Modern Controls.

(21) Yellowing degree of blow-molded article

An appearance of the blow-molded article obtained after 3000 pieces molding in (15) was visually observed and evaluated according to the following.

AA: No coloring is observed.
A: Coloring is observed but is within a practical range.
C: Coloring is severe and practicality is poor. (Polyethylene terephthalate (PET))

Table 1 shows characteristics of PET's (1A) to (1E) and (2A) to (2E) used for evaluation tests of blow-molded articles. These PET's are those obtained by polymerization in a continuous melt polycondensation-solid phase polymerization apparatus using a Ge-based catalyst. Further, (2A) and (2B) are those treated in ion-exchange water at 90°C for 5 hours after solid-phase polymerization. In this connection, the DEG contents of these PET's were about 2.8 mol%.

Table 1 also shows characteristics of PET's (3A), (3B), and (3C) ((3A), (3B) and (3C) not according to the invention) using antimony as a catalyst, the DEG contents being all about 2.7 mol%. All PET's (3A) and (3B) are those obtained by polymerization in a continuous melt polycondensation-solid phase polymerization apparatus and PET (3C) is a melt-polycondensed PET obtained in a continuous melt polycondensation apparatus, whose IV is increased in a batch-type solid-phase polymerization apparatus.

Table 1 Characteristics of Polyesters

| | IV (dl/g) | AA content (ppm) | CT content (% by weight) | $\Delta CT_1$ amount (% by weight) | Phosphorus content (ppm) | Fine content (ppm) | Remaining Sb content (ppm) |
|---|---|---|---|---|---|---|---|
| PET(1A) | 0.74 | 2.6 | 0.30 | 0.06 | 55 | 50 | 0 (Ge catalyst) |
| PET(1B) | 0.74 | 2.9 | 0.31 | 0.13 | 55 | 65 | 0 (Gecatalyst) |
| PET(1C) | 0.75 | 2.8 | 0.51 | 0.52 | 55 | 65 | 0 (Ge catalyst) |
| PET(1D) | 0.75 | 9.3 | 0.61 | 0.50 | 0 | ca. 500 | 0 (Ge catalyst) |
| PET(1E) | 0.75 | 2.8 | 0.65 | 0.50 | 55 | ca. 500 | 0 (Ge catalyst) |
| PET(2A) | 0.74 | 2.7 | 0.30 | 0.04 | 30 | 50 | 0 (Ge catalyst) |
| PET(2B) | 0.74 | 2.9 | 0.33 | 0.10 | 30 | 50 | 0 (Ge catalyst) |
| PET(2C) | 0.75 | 3.0 | 0.53 | 0.50 | 34 | 60 | 0 (Ge catalyst) |
| PET(2D) | 0.75 | 8.0 | 0.60 | 0.50 | 0 | ca. 500 | 0 (Ge catalyst) |
| PET(2E) | 0.75 | 3.0 | 0.65 | 0.53 | 50 | ca. 500 | 0 (Ge.catalyst) |
| PET(3A) * | 0.78 | 3.0 | 0.32 | Not measured | 30 | 80 | 180 |
| PET(3B) * | 0.78 | 3.2 | 0.32 | Not measured | 30 | 80 | 230 |

(continued)

| | IV (dl/g) | AA content (ppm) | CT content (% by weight) | $\Delta CT_1$ amount (% by weight) | Phosphorus content (ppm) | Fine content (ppm) | Remaining Sb content (ppm) |
|---|---|---|---|---|---|---|---|
| PET(3C) * | 0.79 | 3.2 | 0.33 | Not measured | 30 | 5000 | 160 |
| *not according to the invention | | | | | | | |

(m-Xylylene group-containing polyamide (Ny-MXD6))

Table 2 shows characteristics of Ny-MXD6 (1F) to (1I), (2F) to (2I), (3D), and (3E) ((3D) and (3E) not according to the invention) used.

The Ny-MXD6 (1F) to (1I), (2F) to (2I), (3D), and (3E) are those obtained by a batch-type process of polycondensation by heating m-xylylenediamine and adipic acid in the presence of NaOH or $NaH_2PO_2 \cdot H_2O$ under pressure and under normal pressure in a pressure pot for polycondensation. The sodium contents of the Ny-MXD6 (1F) to (1H) and (2F) to (2H) were set so that total amount of sodium atom in sodium hypophosphite and sodium hydroxide was from 3.0 to 3.5 molar equivalents to that of phosphorus atom. In this connection, the characteristics were varied by changing the use ratio of m-xylylenediamine to adipic acid and the polymerization conditions.

Ny-MXD6 (1I) and (2I) are those obtained in a similar manner to Ny-MXD6 (1H). However, no phosphorus atom-containing compound and no alkaline compound were added.

Table 2 Characteristics of polyamides

| | Rv | phosphorus content (ppm) | Na content (ppm) | CM content (% by weight) | AEG ($\mu$mol/g) | CEG ($\mu$mol/g) | AEG/CEG |
|---|---|---|---|---|---|---|---|
| NyMXD6(1F) | 1.80 | 290 | 650 | 0.48 | 185 | 35 | 5.3 |
| NyMXD6(1G) | 1.95 | 55 | 120 | 0.59 | 86 | 70 | 1.2 |
| NyMXD6(1H) | 2.20 | 675 | 1500 | 1.50 | 73 | 70 | 1.0 |
| NyMXD6(11) | 2.30 | 0 | 0 | 1.20 | 50 | 75 | 0.7 |
| NyMXD6(2F) | 1.85 | 180 | 400 | 0.45 | 156 | 80 | 2.0 |
| NyMXD6(2G) | 1.87 | 350 | 780 | 0.56 | 140 | 98 | 1.4 |
| NyMXD6(2H) | 2.20 | 750 | 1900 | 1.70 | 80 | 63 | 1.3 |
| NyMXD6(21) | 2.20 | 0 | 0 | 1.60 | 77 | 65 | 1.2 |
| NyMXD6(3D) * | 1.30 | 210 | 400 | 0.45 | 190 | 157 | 1.2 |
| NyMXD6(3E) * | 1.80 | 150 | 300 | 0.60 | 155 | 75 | 2.1 |
| *not according to the invention | | | | | | | |

(Example 1)

Using 2 parts by weight of Ny-MXD6 (1G) per 100 parts by weight of PET (1C), they were dry-blended after separately dried by the drying method described in the evaluation method (15) and the blend was molded at a resin temperature of 285°C by means of an injection molding machine M-150C (DM) manufactured by Meiki Co., Ltd to produce a preform. The preform was subjected to biaxial orientation blow molding using an orientation blow molding machine LB-01E manufactured by Corpoplast to obtain a 2000 $cm^3$ blow-molded article.

Table 3 shows evaluation results of characteristics of the resulting blow-molded article.

It was possible to obtain a blow-molded article excellent in transparency and flavor retention wherein the sodium content of the polyester composition was 2 ppm, the difference ($A_t$ - $A_0$) between the acetaldehyde contents before and after injection molding was 8 ppm, the AA content of the blow-molded article was 10 ppm, the FA content was 0.4 ppm, evaluation in sensory test was "AA", and transparency was "AA".

(Example 2)

Using 10 parts by weight of Ny-MXD6 (1F) per 100 parts by weight of PET (1C), a 2000cm$^3$ blow-molded article was obtained by molding in a similar manner to Example 1 and was evaluated.
Table 3 shows evaluation results of characteristics of the resulting blow-molded article.
The sodium content of the polyester composition was 59 ppm, the difference ($A_t$ - $A_0$) between the acetaldehyde contents before and after injection molding was 6 ppm, the AA content of the blow-molded article was 8 ppm, the FA content was 0.2 ppm, evaluation in sensory test was "A", and transparency was "AA", and thus there was no problem. In addition, oxygen barrier properties were also improved.

(Example 3)

Using 30 parts by weight of Ny-MXD6 (1F) per 100 parts by weight of PET (1C), a blow-molded article was obtained by molding in a similar manner to Example 1 and was evaluated.
Table 3 shows evaluation results of characteristics of the resulting blow-molded article.
The sodium content of the polyester composition was 150 ppm, the difference ($A_t$ - $A_0$) between the acetaldehyde contents before and after injection molding was 5 ppm, the AA content of the blow-molded article was 6 ppm, the FA content was 0.1 ppm, evaluation in sensory test was "A", and transparency was "A", and thus there was no problem.

(Comparative Example 1)

Using 10 parts by weight of Ny-MXD6 (1I) per 100 parts by weight of PET (1D), a blow-molded article was obtained by molding in a similar manner to Example 1 and was evaluated.
Table 3 shows evaluation results of characteristics of the resulting blow-molded article.
The sodium content of the polyester composition was 0 ppm, the difference ($A_t$ - $A_0$) between the acetaldehyde contents before and after injection molding was 18 ppm, the AA content of the blow-molded article was 22 ppm, the FA content was 4.8 ppm, and transparency was "C (colored non-melted matter is observed)" which was bad, so that the article lacked in practicality.

(Comparative Example 2)

Using 30 parts by weight of Ny-MXD6 (1H) per 100 parts by weight of PET (1E), a blow-molded article was obtained by molding in a similar manner to Example 1 and was evaluated.
Table 3 shows evaluation results of characteristics of the resulting blow-molded article.
The sodium content of the polyester composition was 346 ppm, the difference ($A_t$ - $A_0$) between the acetaldehyde contents before and after injection molding was 11 ppm, the AA content of the blow-molded article was 15 ppm, and the FA content was 4.2 ppm, but transparency was "C (transparency is poor)" and evaluation in sensory test was "CC" which were bad, so that the article lacked in practicality.

(Comparative Example 3)

Using 100 parts by weight of PET (1D), a blow-molded article was obtained by molding in a similar manner to Example 1 and was evaluated.
Table 3 shows evaluation results of characteristics of the resulting blow-molded article.

(Example 4)

Using 10 parts by weight of Ny-MXD6 (1G) per 100 parts by weight of PET (1A), a blow-molded article was obtained by molding according to the method of the evaluation method (15) and evaluation on mold fouling was also carried out.
Table 4 shows evaluation results of characteristics and mold fouling of the resulting blow-molded article.
The difference ($A_t$ - $A_0$) between the acetaldehyde contents of the polyester composition before and after injection molding was 5 ppm, the sodium content of the blow-molded article was 11 ppm, the AA content of the blow-molded article was 9 ppm, the ΔAA content was 10 ppm, the FA content was 0.3 ppm, the content of cyclic ester trimer was 0.32% by weight, the increase of the content of cyclic ester trimer ($\Delta CT_2$ amount) was 0.04% by weight, the CM content was 530 ppm, evaluation in sensory test was "A", transparency was "A", and no attached matter to the mold was observed.

(Example 5)

Using 20 parts by weight of Ny-MXD6 (1F) per 100 parts by weight of PET (1B), a blow-molded article was obtained by molding according to the method of the evaluation method (15) and evaluation on mold fouling was also carried out.

Table 4 shows evaluation results of characteristics and mold fouling of the resulting blow-molded article.

The difference ($A_t$ - $A_0$) between the acetaldehyde contents of the polyester composition before and after injection molding was 5 ppm, the sodium content of the blow-molded article was 108 ppm, the AA content of the blow-molded article was 7 ppm, the ΔAA content was 10 ppm, the FA content was 0.1 ppm, the content of cyclic ester trimer was 0.34% by weight, the increase of the content of cyclic ester trimer ($\Delta CT_2$ amount) was 0.09% by weight, the CM content was 1100 ppm, evaluation in sensory test was "A", transparency was "A", and no attached matter to the mold was observed.

(Example 6)

Using 30 parts by weight of Ny-MXD6 (1F) per 100 parts by weight of PET (1A), a blow-molded article was obtained by molding according to the method of the evaluation method (15) and evaluation on mold fouling was also carried out. Table 4 shows evaluation results of characteristics and mold fouling of the resulting blow-molded article.

The difference ($A_t$ - $A_0$) between the acetaldehyde contents of the polyester composition before and after injection molding was 4 ppm, the sodium content of the blow-molded article was 150 ppm, the AA content of the blow-molded article was 5 ppm, the ΔAA content was 8 ppm, the FA content was 0.1 ppm, the content of cyclic ester trimer was 0.31% by weight, the increase of the content of cyclic ester trimer ($\Delta CT_2$ amount) was 0.05% by weight, the CM content was 1400 ppm, evaluation in sensory test was "A", transparency was "A", and no attached matter to the mold was observed.

(Comparative Example 4)

Using 0.05 part by weight of Ny-MXD6 (1I) per 100 parts by weight of PET (1D), a blow-molded article was obtained by molding according to the method of the evaluation method (15) and evaluation on mold fouling was also carried out.

Table 4 shows evaluation results of characteristics and mold fouling of the resulting blow-molded article.

The difference ($A_t$ - $A_0$) between the acetaldehyde contents of the polyester composition before and after injection molding was 27 ppm, the phosphorus content of the blow-molded article was 0 ppm, the AA content of the blow-molded article was 41 ppm, the ΔAA content was 35 ppm, the FA content was 5.4 ppm, the content of cyclic ester trimer was 0.66% by weight, the increase of the content of cyclic ester trimer ($\Delta CT_2$ amount) was 0.50% by weight, evaluation in sensory test was "CC", and transparency was "C" which were bad, and mold fouling was severe.

(Comparative Example 5)

Using 30 parts by weight of Ny-MXD6 (1H) per 100 parts by weight of PET (1E), a blow-molded article was obtained by molding according to the method of the evaluation method (15) and evaluation on mold fouling was also carried out.

Table 4 shows evaluation results of characteristics and mold fouling of the resulting blow-molded article.

The difference ($A_t$ - $A_0$) between the acetaldehyde contents of the polyester composition before and after injection molding was 7 ppm, the sodium content of the blow-molded article was 346 ppm, the AA content of the blow-molded article was 13 ppm, the ΔAA content was 18 ppm, the FA content was 4.3 ppm, the content of cyclic ester trimer was 0.71% by weight, the increase of the content of cyclic ester trimer ($\Delta CT_2$ amount) was 0.52% by weight, the CM content was 3800 ppm, evaluation in sensory test was "CC", and transparency was "C" which were bad, and mold fouling was severe.

Table 3 Characteristics of polyester compositions and blow-molded articles

| | PET (part by weight) | | NY-MXD6 (part by weight) | | Polyester composition | | Blow-molded article | | | | |
|---|---|---|---|---|---|---|---|---|---|---|---|
| | | | | | Na content (ppm) | $A_1$-$A_0$ | AA content (ppm) | FA content (ppm) | Transparency | Sensory test | Oxygen permeability (cc/one container 24 hr·atm) |
| Example 1 | (1C) | 100 | (1G) | 2 | 2 | 8 | 10 | 0.2 | AA | AA | - |
| Example 2 | (1C) | 100 | (1F) | 10 | 59 | 6 | 8 | 0.4 | A | AA | 0.30 |
| Example 3 | (1C) | 100 | (1F) | 30 | 150 | 5 | 6 | 0.1 | A | A | 0.20 |
| Comparative Example 1 | (1D) | 100 | (11) | 10 | 0 | 18 | 22 | 4.8 | C | A | 0.30 |
| Comparative Example 2 | (1E) | 100 | (1H) | 30 | 346 | 11 | 15 | 4.2 | C | CC | 0.17 |
| Comparative Example 3 | (1D) | 100 | - | - | 0 | 32 | 47 | 6.5 | AA | CC | 0.58 |

Table 4 Characteristics of blow-molded articles

| | PET (part by weight) | | NY-MXD6 (part by weight) | | Characteristics of blow mold articles | | | | | | | | | | |
|---|---|---|---|---|---|---|---|---|---|---|---|---|---|---|---|
| | | | | | Na content (ppm) | AA content (ppm) | ΔAA (ppm) | FA content (ppm) | CT content (% by weight) | $\Delta CT_2$ (% by weight) | CM content (ppm) | Transparency | Sensory test | Oxygen permeability (cclone container - 24 hr·atm) | Mold fouling |
| Example 4 | (1A) | 100 | (1G) | 10 | 11 | 9 | 10 | 0.3 | 0.32 | 0.04 | 530 | A | A | 0.31 | AA |
| Example 5 | (1B) | 100 | (1 F) | 20 | 108 | 7 | 10 | 0.1 | 0.34 | 0.09 | 1100 | A | A | 0.20 | AA |
| Example 6 | (1A) | 100 | (1F) | 30 | 150 | 5 | 8 | 0.1 | 0.31 | 0.05 | 1400 | A | A | 0.17 | AA |
| Comparative Example 4 | (1D) | 100 | (11) | 0.0 5 | 0 | 41 | 35 | 5.4 | 0.66 | 0.50 | 10 | C | CC | 0.57 | C |
| Comparative Example 5 | (1E) . | 100 | (1 H) | 30 | 346 | 13 | 18 | 4.3 | 0.71 | 0.52 | 3800 | C | CC | 0.17 | C |

CT = cyclic ester trimer CM = cyclic amide monomer

(Example 7)

Using 2 parts by weight of Ny-MXD6 (2F) per 100 parts by weight of PET (2C), they were dry-blended after separately dried by the drying method described in the evaluation method (15) and the blend was molded at a resin temperature of 285°C by means of an injection molding machine M-150C (DM) manufactured by Meiki Co., Ltd to produce a preform. The preform was subjected to biaxial orientation blow molding using an orientation blow molding machine LB-01E manufactured by Corpoplast to obtain a 2000 $cm^3$ blow-molded article.

Table 5 shows evaluation results of characteristics of the resulting blow-molded article.

It was possible to obtain a blow-molded article excellent in transparency and flavor retention wherein the phosphorus content of the polyester composition was 36 ppm, the difference ($A_t$ - $A_0$) between the acetaldehyde contents before and after injection molding was 9 ppm, the AA content of the blow-molded article was 10 ppm, the FA content was 0.4 ppm, evaluation in sensory test was "AA", and transparency was "AA".

(Example 8)

Using 10 parts by weight of Ny-MXD6 (2F) per 100 parts by weight of PET (2C), a 2000$cm^3$ blow-molded article was obtained by molding in a similar manner to Example 7 and was evaluated.

Table 5 shows evaluation results of characteristics of the resulting blow-molded article.

The phosphorus content of the polyester composition was 47 ppm, the difference ($A_t$ - $A_0$) between the acetaldehyde contents before and after injection molding was 6 ppm, the AA content of the blow-molded article was 9 ppm, the FA content was 0.1 ppm, evaluation in sensory test was "A", and transparency was "AA", and thus there was no problem. In addition, oxygen barrier properties were also improved.

(Example 9)

Using 30 parts by weight of Ny-MXD6 (2G) per 100 parts by weight of PET (2C), a blow-molded article was obtained by molding in a similar manner to Example 7 and was evaluated.

Table 5 shows evaluation results of characteristics of the resulting blow-molded article.

The phosphorus content of the polyester composition was 107 ppm, the difference ($A_t$ - $A_0$) between the acetaldehyde contents before and after injection molding was 5 ppm, the AA content of the blow-molded article was 6 ppm, the FA content was 0.1 ppm, evaluation in sensory test was "A", and transparency was "A", and thus there was no problem.

(Comparative Example 6)

Using 10 parts by weight of Ny-MXD6 (2I) per 100 parts by weight of PET (2D), a blow-molded article was obtained by molding in a similar manner to Example 7 and was evaluated.

Table 5 shows evaluation results of characteristics of the resulting blow-molded article.

The phosphorus content of the polyester composition was 0 ppm, the difference ($A_t$ - $A_0$) between the acetaldehyde contents before and after injection molding was 23 ppm, the AA content of the blow-molded article was 29 ppm, the FA content was 4.8 ppm, and transparency was "C (transparency is poor and colored non-melted matter is observed)" and sensory test was "B" which were bad, so that the article lacked in practicality.

(Comparative Example 7)

Using 30 parts by weight of Ny-MXD6 (2H) per 100 parts by weight of PET (2E), a blow-molded article was obtained by molding in a similar manner to Example 7 and was evaluated.

Table 5 shows evaluation results of characteristics of the resulting blow-molded article.

The phosphorus content of the polyester composition was 211 ppm, the difference ($A_t$ - $A_0$) between the acetaldehyde contents before and after injection molding was 12 ppm, the AA content of the blow-molded article was 15 ppm, and the FA content was 4.1 ppm, but transparency was "C (transparency is poor)" and evaluation in sensory test was "CC" which were bad, so that the article lacked in practicality.

(Comparative Example 8)

Using 100 parts by weight of PET (2D), a blow-molded article was obtained by molding in a similar manner to Example 7 and was evaluated.

Table 5 shows evaluation results of characteristics of the resulting blow-molded article.

(Example 10)

Using 10 parts by weight of Ny-MXD6 (2F) per 100 parts by weight of PET (2A), a blow-molded article was obtained by molding according to the method of the evaluation method (15) and evaluation on mold fouling was also carried out.

Table 6 shows evaluation results of characteristics and mold fouling of the resulting blow-molded article.

The difference ($A_t$ - $A_0$) between the acetaldehyde contents of the polyester composition before and after injection molding was 5 ppm, the phosphorus content of the blow-molded article was 44 ppm, the AA content of the blow-molded article was 8 ppm, the ΔAA content was 11 ppm, the FA content was 0.2 ppm, the content of cyclic ester trimer was 0.32% by weight, the increase of the content of cyclic ester trimer ($\Delta CT_2$ amount) was 0.05% by weight, the CM content was 510 ppm, evaluation in sensory test was "A", transparency was "A", and no attached matter to the mold was observed.

(Example 11)

Using 20 parts by weight of Ny-MXD6 (2G) per 100 parts by weight of PET (2B), a blow-molded article was obtained by molding according to the method of the evaluation method (15) and evaluation on mold fouling was also carried out.

Table 6 shows evaluation results of characteristics and mold fouling of the resulting blow-molded article.

The difference ($A_t$ - $A_0$) between the acetaldehyde contents of the polyester composition before and after injection molding was 5 ppm, the phosphorus content of the blow-molded article was 83 ppm, the AA content of the blow-molded article was 8 ppm, the ΔAA content was 11 ppm, the FA content was 0.1 ppm, the content of cyclic ester trimer was 0.37% by weight, the increase of the content of cyclic ester trimer ($\Delta CT_2$ amount) was 0.10% by weight, the CM content was 1000 ppm, evaluation in sensory test was "A", transparency was "A", and no attached matter to the mold was observed.

(Example 12)

Using 30 parts by weight of Ny-MXD6 (2G) per 100 parts by weight of PET (2A), a blow-molded article was obtained by molding according to the method of the evaluation method (15) and evaluation on mold fouling was also carried out. Table 6 shows evaluation results of characteristics and mold fouling of the resulting blow-molded article.

The difference ($A_t$ - $A_0$) between the acetaldehyde contents of the polyester composition before and after injection molding was 4 ppm, the phosphorus content of the blow-molded article was 104 ppm, the AA content of the blow-molded article was 6 ppm, the ΔAA content was 9 ppm, the FA content was 0.1 ppm, the content of cyclic ester trimer was 0.32% by weight, the increase of the content of cyclic ester trimer ($\Delta CT_2$ amount) was 0.05% by weight, the CM content was 1300 ppm, evaluation in sensory test was "A", transparency was "A", and no attached matter to the mold was observed.

(Comparative Example 9)

Using 0.05 part by weight of Ny-MXD6 (2I) per 100 parts by weight of PET (2D), a blow-molded article was obtained by molding according to the method of the evaluation method (15) and evaluation on mold fouling was also carried out. Table 6 shows evaluation results of characteristics and mold fouling of the resulting blow-molded article.

The difference ($A_t$ - $A_0$) between the acetaldehyde contents of the polyester composition before and after injection molding was 25 ppm, the phosphorus content of the blow-molded article was 0 ppm, the AA content of the blow-molded article was 40 ppm, the ΔAA content was 35 ppm, the FA content was 6.5 ppm, the content of cyclic ester trimer was 0.65% by weight, the increase of the content of cyclic ester trimer ($\Delta CT_2$ amount) was 0.51% by weight, evaluation in sensory test was "C", and transparency was "C (transparency is poor and colored non-melt matter is observed)" which were bad, and mold fouling was severe.

(Comparative Example 10)

Using 30 parts by weight of Ny-MXD6 (2H) per 100 parts by weight of PET (2E), a blow-molded article was obtained by molding according to the method of the evaluation method (15) and evaluation on mold fouling was also carried out. Table 6 shows evaluation results of characteristics and mold fouling of the resulting blow-molded article.

The difference ($A_t$ - $A_0$) between the acetaldehyde contents of the polyester composition before and after injection molding was 7 ppm, the phosphorus content of the blow-molded article was 211 ppm, the AA content of the blow-molded article was 13 ppm, the ΔAA content was 17 ppm, the FA content was 4.2 ppm, the content of cyclic ester

trimer was 0.70% by weight, the increase of the content of cyclic ester trimer ($\Delta CT_2$ amount) was 0.54% by weight, the CM content was 4000 ppm, evaluation in sensory test was "CC", and transparency was "C (transparency is poor)" which were bad, and mold fouling was severe.

Table 5 Characteristics of polyester compositions and blow-molded articles

| | PET (part by weight) | | NY-MXD6 (part by wight) | | Polyester composition | | Blow-molded article | | | | |
|---|---|---|---|---|---|---|---|---|---|---|---|
| | | | | | Phosphorus con-tent (ppm) | $A_t$-$A_0$ | AA content (ppm) | FA content (ppm) | Transparency | Sensory test | Oxygen permeability (cc/one container 24 hr atm) |
| Example 7 | (2C) | 100 | (2F) | 2 | 36 | 9 | 10 | 0.4 | AA | AA | |
| Example 8 | (2C) | 100 | (2F) | 10 | 47 | 6 | 9 | 0.1 | A | AA | 0.30 |
| Example 9 | (2C) | 100 | (2G) | 30 | 107 | 5 | 6 | 0.1 | A | A | 0.20 |
| Comparative Example 6 | (2D) | 100 | (21) | 10 | 0 | 23 | 29 | 4.8 | C | B | 0.30 |
| Comparative Example 7 | (2E) | 100 | (2H) | 30 | 211 | 12 | 15 | 4.1 | C | CC | 0.17 |
| Comparative Example 8 | (20) | 100 | - | - | 0 | 31 | 45 | 6.2 | AA | CC | 0.58 |

Table 6 Characteristics of blow-molded articles

| | PET (part by weight) | | NY-MXD6 (part by weight) | | Characteristics of blow mold articles | | | | | | | | | | |
|---|---|---|---|---|---|---|---|---|---|---|---|---|---|---|---|
| | | | | | Na content (ppm) | AA content (ppm) | ΔAA (ppm) | FA content (ppm) | CT content (% by weight) | $\Delta CT_2$ (%by weight) | CM content (ppm) | Transparency | Sensory test | Oxygen permeability (cc/one container 24 hr·atm) | Mold fouling |
| Example 10 | (2A) | 100 | (2F) | 10 | 44 | 8 | 11 | 0.2 | 0.32 | 0.05 | 510 | A | A | 0.31 | AA |
| Example 11 | (2B) | 100 | (2G) | 20 | 83 | 8 | 11 | 0.1 | 0.37 | 0.10 | 1000 | A | A | 0.20 | O |
| Example 12 | (2A) | 100 | (2G) | 30 | 104 | 6 | 9 | 0.1 | 0.32 | 0.05 | 1300 | A | A | 0.17 | AA |
| Comparative Example 9 | (2D) | 100 | (21) | 0.05 | 0 | 40 | 35 | 6.5 | 0.65 | 0.51 | 10 | C | C | 0.57 | C |
| Comparative Example 10 | (2E) | 100 | (2H) | 30 | 211 | 13 | 17 | 4.2 | 0.70 | 0.54 | 4000 | C | CC | 0.17 | C |

CT = cyclic ester trimer CM = cyclic amide monomer

(Example 13) (not according to the invention)

Using 0.5 part by weight of Ny-MXD6 (3E) per 100 parts by weight of PET (3A), a molded plate and a blow-molded article were obtained by molding according to the method of the evaluation method (15) and were evaluated.
Table 7 shows characteristics and evaluation results of the resulting molded plate and blow-molded article.
The molded plate obtained by injection molding was satisfactory in both of color tone and haze. Further, the AA content of the blow-molded article was 7 ppm, the FA content was 0.1 ppm, evaluation in sensory test was 0.7, and the appearance was transparent within a practical range.

(Example 14) (not according to the invention)

Using 3.0 parts by weight of Ny-MXD6 (3E) per 100 parts by weight of PET (3A), a molded plate and a blow-molded article were obtained by molding according to the method of the evaluation method (15) and were evaluated.
Table 7 shows characteristics and evaluation results of the resulting molded plate and blow-molded article.
The molded plate obtained by injection molding was satisfactory in both of color tone and haze. Further, the AA content of the blow-molded article was 6 ppm, the FA content was 0.08 ppm, evaluation in sensory test was 0.6, and the appearance was transparent within a practical range.

(Example 15) (not according to the invention)

Using 3.0 parts by weight of Ny-MXD6 (3D) per 100 parts by weight of PET (3A), a molded plate and a blow-molded article were obtained by molding according to the method of the evaluation method (15) and were evaluated. Table 7 shows characteristics and evaluation results of the resulting molded plate and blow-molded article.
The molded plate obtained by injection molding was satisfactory in both of color tone and haze. Further, the AA content of the blow-molded article was 7 ppm, the FA content was 0.07 ppm, evaluation in sensory test was 0.6, and the appearance was transparent within a practical range.

(Example 16) (not according to the invention)

Using 20.0 part by weight of Ny-MXD6 (3E) per 100 parts by weight of PET (3A), a molded plate and a blow-molded article were obtained by molding according to the method of the evaluation method (15) and were evaluated. Table 7 shows characteristics and evaluation results of the resulting molded plate and blow-molded article.
The molded plate obtained by injection molding was satisfactory in both of color tone and haze. Further, the AA content of the blow-molded article was 6 ppm, the FA content was 0.05 ppm, evaluation in sensory test was 0.7, and the appearance was transparent within a practical range.

(Comparative Example 11)

Using 3.0 parts by weight of Ny-MXD6 (3E) per 100 parts by weight of PET (3B), a molded plate and a blow-molded article were obtained by molding according to the method of the evaluation method (15) and were evaluated.
Table 7 shows characteristics and evaluation results of the resulting molded plate and blow-molded article.
The molded plate obtained by injection molding had a low Color-L value and was darkly. Further, the AA content of the blow-molded article was 9 ppm, the FA content was 0.5 ppm, and evaluation in sensory test was 0.8, which were satisfactory, but transparency was bad.

(Comparative Example 12)

Using 20.0 part by weight of Ny-MXD6 (3E) per 100 parts by weight of PET (3C), a molded plate and a blow-molded article were obtained by molding according to the method of the evaluation method (15) and were evaluated.
Table 7 shows characteristics and evaluation results of the resulting molded plate and blow-molded article.
The molded plate obtained by injection molding was satisfactory in color tone but the haze value was high. Further, the AA content of the blow-molded article was 10 ppm, the FA content was 0.3 ppm, evaluation in sensory test was 0.8, which were satisfactory, but transparency was bad.

Table 7

| | Item | Example 13* | Example 14* | Example 15* | Example 16* | Comparative Example 11 | Comparative Example 12 |
|---|---|---|---|---|---|---|---|
| Polyester composition | PET(3A) (part by weight) | 100 | 100 | 100 | 100 | | |
| | PET(3B) (part by weight) | | | | | 100 | |
| | PET(3C) (part by weight) | | | | | | 100 |
| | Ny-MXD6 (3E) (part by weight) | | | 3.0 | | | |
| | Ny-MXD6 (3E) (part by weight) | 0.5 | 3.0 | | 20.0 | 3.0 | 20.0 |
| Molded plate | Haze (%, 2mm) | 0.6 | 1.0 | 0.8 | 15.0 | 22.4 | 32.1 |
| | Color tone (Color-L value) (2mm) | 89.1 | 88.5 | 88.7 | 86.4 | 78.9 | 87.7 |
| | At-A0 (ppm) | 5 | 4 | 4 | 3 | 7 | 6 |
| Blow-molded article | AA content (ppm) | 7 | 6 | 7 | 6 | 9 | 10 |
| | FA content (ppm) | 0.1 | 0.08 | 0.07 | 0.05 | 0.5 | 0.3 |
| | Transparency | A | A | A | A | C | C |
| | Sensory test | 0.7 | 0.6 | 0.6 | 0.7 | 0.8 | 0.8 |
| | Oxygen permeability (cc/one container·24 hr· atm) | - | - | - | 0.20 | - | - |
| *not according to the invention | | | | | | | |

(Example 17) (not according to the invention)

Using 1.0 part by weight of Ny-MXD6 (4b) and 0.03 part by weight of 2-aminobenzamide (a reagent manufactured by Tokyo Kasei Kogyo Co., Ltd.) per 100 parts by weight of PET (4a), a blow-molded article was obtained by molding according to the method of the evaluation method (15) and the CM content, the CT content, and the AA content of the molded article were measured. In addition, evaluation on mold fouling was also carried out.

Table 8 shows characteristics of the resulting blow-molded article and evaluation results of mold fouling thereof.

PET (4a) is one obtained by polymerization in a continuous melt polycondensation-solid phase polymerization apparatus and subsequent treatment with hot water in ion-exchange water at about 90°C for 3 hours, and has the following characteristics: Ge remaining amount of 40 ppm, phosphorus remaining amount of 35 ppm, IC of 0.74 dl/g, AA content of 2.4 ppm, CT content of 0.31% by weight, and $\Delta CT_1$ of 0.04% by weight. Further, Ny-MXD6 (4b) has Rv of 1.8 and CM content of 2.3% by weight.

(Examples 18 to 20 not according to the invention and Comparative Examples 13 and 14)

Each blow-molded articles was produced in the ratios shown in Table 8 in a similar manner to Example 1 and

was evaluated. Table 8 shows the results. A reagent manufactured by Tokyo Kasei Kogyo Co., Ltd. was used as 1,8-diaminonaphthalate.

Table 8

| | | Example 17* | Example 18* | Example 19* | Example 20* | Comparative Example 13 | Comparative Example 14 |
|---|---|---|---|---|---|---|---|
| Polyester composition | PET(4a) (part by weight) | 100 | 100 | 100 | 100 | 100 | 100 |
| | Ny-MXD6 (4c) (part by weight) | 1.0 | 0.5 | 0.5 | 10.0 | | |
| | 2-Aminobenzamide (part by weight) | 0.03 | | 0.05 | 0.05 | 1.2 | |
| | 1,8-diamino-naphthalate (part by weight) | | 0.10 | | | | |
| Molded plate | Haze (%, 5mm) | 7.4 | 5.8 | 5.1 | 15.2 | 22.0 | 1.5 |
| Blow-molded article | AA content (ppm) | 7 | 8 | 8 | 7 | 10 | 28 |
| | FA content (ppm) | 0.2 | 0.1 | 0.1 | 0.1 | 4.2 | 6.7 |
| | CT content (% by weight) | 0.35 | 0.37 | 0.38 | 0.36 | 0.35 | 0.37 |
| | CM total content (% by weight) | 0.02 | 0.01 | 0.01 | 0.23 | - | - |
| | Mold fouling | A | A | A | A | B | A |
| | Transparency | A | A | A | A | C | A |
| | Yellowing degree | A | A | A | A | C | A |
| | Sensory test | 0.7 | 0.7 | 0.6 | 0.7 | 2.6 | 2.5 |
| | Oxygen permeability (cc/one contain-er·24 hr· atm) | - | - | - | 0.20 | - | |
| *not according to the invention | | | | | | | |

<Effects of the Invention>

According to the present invention, a polyester composition excellent in transparency, thermal stability, and flavor retention, or transparency, thermal stability, flavor retention, and gas barrier properties is obtained. The polyester composition of the invention is extremely suitable as a packaging material for drinks such as beverages as mentioned above.

## Claims

1. A polyester composition comprising 100 parts by weight of a thermoplastic polyester and 0.1 to 50 parts by weight of a partially aromatic polyamide, wherein the content of an alkali metal atom in the polyester composition is within the range of 0.1 to 300 ppm.

2. The polyester composition according to claim 1, wherein the content of phosphorus atom in the polyester composition is within the range of 5 to 200 ppm.

3. The polyester composition according to claim 1 or 2, wherein the partially aromatic polyamide is an m-xylylene group-containing polyamide.

4. The polyester composition according to any one of claims 1 to 3, wherein the thermoplastic polyester is a polyester comprising ethylene terephthalate as a main repeating unit.

5. The polyester composition according to any one of claims 1 to 4, wherein the difference ($A_t$ - $A_0$) between the acetaldehyde content ($A_t$) (ppm) in an molded article obtained by injection molding of the polyester composition and the acetaldehyde content ($A_0$) (ppm) of the polyester composition before injection molding is 20 ppm or less.

6. The polyester composition according to any one of claims 1 to 5, wherein the content of a cyclic trimer derived from the thermoplastic polyester is 0.7% by weight or less.

7. The polyester composition according to any one of claims 1 to 6, wherein the increase of a cyclic trimer derived from the thermoplastic polyester during melting treatment at 290°C for 30 minutes is 0.4% by weight or less.

8. A polyester packaging material, which is obtained by molding the polyester composition according to any one of claims 1 to 7.

9. The polyester packaging material according to claim 8, wherein the packaging material is at least any one of blow-molded articles, sheet articles, and films.

## Patentansprüche

1. Polyesterzusammensetzung, die 100 Gewichtsteile eines thermoplastischen Polyesters und 0,1 bis 50 Gewichtsteile eines partiell aromatischen Polyamids umfasst, wobei der Gehalt an Alkalimetallatomen in der Polyesterzusammensetzung im Bereich von 0,1 bis 300 ppm liegt.

2. Polyesterzusammensetzung gemäß Anspruch 1, wobei der Gehalt an Phosphoratomen in der Polyesterzusammensetzung im Bereich von 5 bis 200 ppm liegt.

3. Polyesterzusammensetzung gemäß Anspruch 1 oder 2, wobei das partiell aromatische Polyamid ein m-Xylylen-Gruppen-haltiges Polyamid ist.

4. Polyesterzusammensetzung gemäß einem der Ansprüche 1 bis 3, wobei der thermoplastische Polyester ein Polyester ist, der Ethylenterephthalat als Hauptrepetiereinheit umfasst.

5. Polyesterzusammensetzung gemäß einem der Ansprüche 1 bis 4, wobei die Differenz ($A_t$ - $A_0$) zwischen dem Acetaldehydgehalt ($A_t$) (ppm) in einem Formteil, das durch Spritzgießen der Polyesterzusammensetzung erhalten wird, und dem Acetaldehydgehalt ($A_0$) (ppm) der Polyesterzusammensetzung vor dem Spritzgießen 20 ppm oder

weniger beträgt.

6. Polyesterzusammensetzung gemäß einem der Ansprüche 1 bis 5, wobei der Gehalt an einem cyclischen Trimer, das von dem thermoplastischen Polyester abgeleitet ist, 0,7 Gew.-% oder weniger beträgt.

7. Polyesterzusammensetzung gemäß einem der Ansprüche 1 bis 6, wobei die Zunahme eines cyclischen Trimers, das von dem thermoplastischen Polyester abgeleitet ist, während der Schmelzbehandlung bei 290 °C während 30 Minuten 0,4 Gew.-% oder weniger beträgt.

8. Polyesterverpackungsmaterial, das durch Formen der Polyesterzusammensetzung gemäß einem der Ansprüche 1 bis 7 erhalten wird.

9. Polyesterverpackungsmaterial gemäß Anspruch 8, wobei es sich bei dem Verpackungsmaterial um blasgeformte Artikel, Bahnen und/oder Folien handelt.

**Revendications**

1. Composition de poly(ester) comprenant 100 parties en poids d'un poly(ester) thermoplastique et 0,1 à 50 parties en poids d'un poly(amide) partiellement aromatique, dans laquelle la teneur en atome de métal alcalin dans la composition de poly(ester) se situe dans la gamme de 0,1 à 300 ppm.

2. Composition de poly(ester) selon la revendication 1, dans laquelle la teneur en atome de phosphore dans la composition de poly(ester) se situe dans la gamme de 5 à 200 ppm.

3. Composition de poly(ester) selon la revendication 1 ou 2, dans laquelle le poly(amide) partiellement aromatique est un poly(amide) contenant un groupe m-xylylène.

4. Composition de poly(ester) selon l'une quelconque des revendications 1 à 3, dans laquelle le poly(ester) thermoplastique est un poly(ester) comprenant du téréphtalate d'éthylène en tant que motif de répétition principal.

5. Composition de poly(ester) selon l'une quelconque des revendications 1 à 4, dans laquelle la différence ($A_t$ - $A_0$) entre la teneur en acétaldéhyde ($A_t$) (ppm) dans un article moulé obtenu par moulage par injection de la composition de poly(ester) et la teneur en acétaldéhyde ($A_0$) (ppm) de la composition de poly(ester) avant le moulage par injection est de 20 ppm ou moins.

6. Composition de poly(ester) selon l'une quelconque des revendications 1 à 5, dans laquelle la teneur en trimère cyclique dérivé du poly(ester) thermoplastique est de 0,7 % en poids ou moins.

7. Composition de poly(ester) selon l'une quelconque des revendications 1 à 6, dans laquelle l'augmentation d'un trimère cyclique dérivé du poly(ester) thermoplastique pendant le traitement de fusion à 290 °C pendant 30 minutes est de 0,4 % en poids ou moins.

8. Matériau d'emballage en poly(ester), qui est obtenu en moulant la composition de poly(ester) selon l'une quelconque des revendications 1 à 7.

9. Matériau d'emballage en poly(ester) selon la revendication 8, dans lequel le matériau d'emballage est au moins un matériau parmi des articles moulés-soufflés, des articles en feuilles, et des films.

Fig. 1

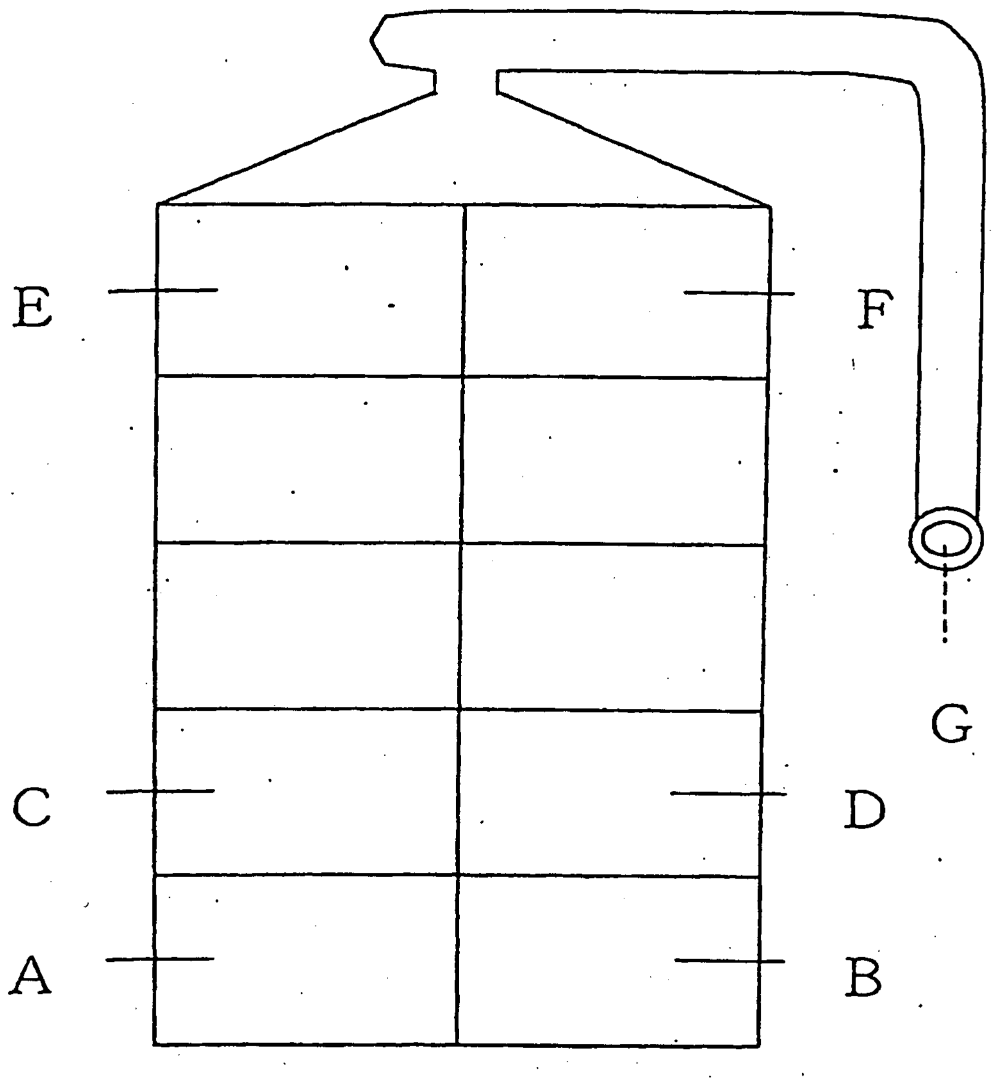

Fig. 2

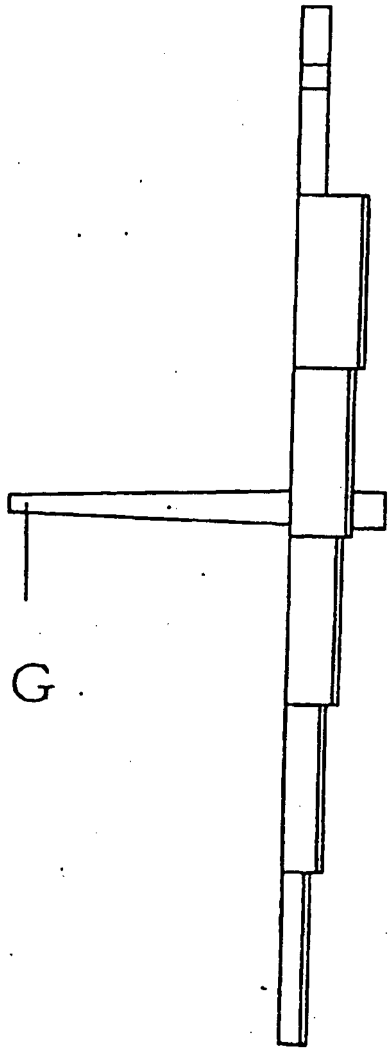

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6006662 B
- JP 4071425 B
- JP 4054702 B
- EP 0522174 A
- WO 9715629 A
- JP 3174441 A
- JP 2000072867 A
- JP 2002249573 A